(19) **Europäisches Patentamt / European Patent Office / Office européen des brevets**

(11) **EP 4 238 745 B1**

(12) **FASCICULE DE BREVET EUROPEEN**

(45) Date de publication et mention de la délivrance du brevet:
**10.12.2025 Bulletin 2025/50**

(51) Classification Internationale des Brevets (IPC):
**B29C 70/24** *(2006.01)* **B29C 70/08** *(2006.01)*

(21) Numéro de dépôt: **23180425.3**

(52) Classification Coopérative des Brevets (CPC):
**B29C 70/24; B29C 70/086**

(22) Date de dépôt: **08.07.2020**

(54) **PROCEDE DE RENFORCEMENT D'UN PANNEAU ET UN PROCEDE DE FABRICATION DE PANNEAU COMPOSITE METTANT EN OEUVRE UN TEL PROCEDE**

VERFAHREN ZUR VERSTÄRKUNG EINER PLATTE UND VERFAHREN ZUR HERSTELLUNG EINER VERBUNDPLATTE UNTER VERWENDUNG DIESES VERFAHRENS

METHOD FOR REINFORCING A PANEL AND METHOD FOR MANUFACTURING A COMPOSITE PANEL USING SUCH A METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.07.2019 FR 1907623**

(43) Date de publication de la demande:
**06.09.2023 Bulletin 2023/36**

(62) Numéro(s) de document de la (des) demande(s) initiale(s) en application de l'article 76 CBE:
**20736712.9 / 3 996 901**

(72) Inventeurs:
- **MARCOVICH, Philippe**
  **13220 Châteauneuf les Martigues (FR)**
- **SAJET, Philippe**
  **80340 Bray-sur-Somme (FR)**
- **COUVREUR, Xavier**
  **80340 Bray-sur-Somme (FR)**
- **LESTOQUOY, Charles**
  **62600 Groffliers (FR)**
- **LAINE, Cyril**
  **13220 Châteauneuf les Martigues (FR)**

(74) Mandataire: **Plasseraud IP**
  **104 Rue de Richelieu**
  **CS92104**
  **75080 Paris Cedex 02 (FR)**

(73) Titulaires:
- **SICOMIN HOLDING**
  **13220 Chateauneuf-les-Martigues (FR)**
- **Ascodero Productique**
  **80340 Bray-Sur-Somme (FR)**

(56) Documents cités:
**EP-A1- 1 883 526        EP-A1- 3 173 216
EP-B1- 1 883 526        WO-A1-2017/202669
WO-A1-92/00845**

## Description

L'invention est relative à un procédé de renforcement d'un panneau suivant son épaisseur, ainsi qu'un procédé de fabrication de panneaux composite mettant en œuvre un tel procédé de renforcement de panneau.

## Domaine technique

La présente divulgation relève du domaine de la fabrication des sandwiches composites, encore appelés panneaux composites. Un sandwich composite comprend sensiblement trois éléments superposés, plans, ou préformés en 3D, suivant son épaisseur, à savoir deux peaux et un matériau d'âme, intercalaire, classiquement sous forme d'un panneau, plan ou préformé en 3D, intimement lié aux deux peaux. Dans le cadre de la présente divulgation, le matériau d'âme renforcé par l'insertion d'un (ou plusieurs) élément de renfort peut être, à titre d'exemple non limitatif, un panneau de mousse cellulaire tel que des mousses polyéthylène (PE), des mousses polyéthylène téréphtalate (PET), des mousses polyuréthanes (PUR), des mousses acryliques (PMI), des mousses bio-sourcées, et également des matériaux divers tels que le liège par exemple. Les peaux sont classiquement des textiles, à savoir différentes matières tissées suivant différentes armures (sergé ou satin, par exemple), ou encore des tissus unidirectionnels ou multiaxiaux.

L'invention concerne plus particulièrement le domaine des sandwiches composites dont les performances mécaniques sont améliorées par l'ajout de renforts fibreux traversant suivant la direction de l'épaisseur de l'âme, à savoir suivant une direction perpendiculaire à un plan moyen (ou surface moyenne) entre les deux surfaces extérieures du panneau, au niveau du point d'insertion, ou encore suivant une direction inclinée par rapport à cette direction, perpendiculaire au plan moyen (ou à la surface moyenne).

Dans un tel état de la technique, et selon une première possibilité de transformation appelée « *moulage par infusion sous vide* », ou plus simplement « *infusion* », de la résine est appliquée sur la préforme peaux/matériau d'âme: dans un moule sous vide, les renforts fibreux étant imprégnés avec l'arrivée de résine qui est aspirée par la dépression créée dans le moule : une fois polymérisée cette résine assure la solidarisation entre les interfaces peaux/matériau d'âme, et enrobe des fibres ménagées dans des perforations suivant l'épaisseur de l'âme, obtenant ainsi les renforts composites.

Le procédé de renforcement selon la présente divulgation est compatible avec cette première possibilité de transformation.

Le procédé de renforcement selon la présente divulgation n'est toutefois pas limité à cette première possibilité de transformation. Par exemple, à titre d'autre mode de réalisation possible, et suivant une seconde possibilité de transformation, les fibres de renforts des peaux et les fibres de renfort des éléments de renfort peuvent être mélangées avec des fibres thermoplastiques. L'ensemble peaux/matériau d'âme est chauffé afin de provoquer la fusion des fibres thermoplastiques des peaux et des éléments de renfort, et jusqu'à obtenir le sandwich, après polymérisation.

## Technique antérieure

L'état de la technique des sandwiches composites connaît des techniques de renforcement en insérant des fils souples sur la préforme peaux/âme. Les techniques d'insertion de fil connues sont des opérations de couture au travers des trois matériaux de la préforme peaux/âme : les renforts fibreux d'une même ligne sont obtenus par le travail d'une même aiguille de couture qui insère périodiquement un fil continu suivant l'épaisseur de l'âme. Pour réaliser la ligne de renforts suivante, le panneau est avancé d'un pas et l'aiguille procède à un nouveau cycle de couture sur une ligne adjacente.

On connaît encore des techniques de renforcement pour lesquelles les renforts fibreux sont obtenus et insérés par des techniques d'aiguilletage. Dans une telle technique, une série d'aiguilles munies de barbes permet d'entraîner des fibres suivant l'épaisseur de l'âme. Classiquement les fibres entraînées peuvent provenir de l'une des peaux, ou encore d'une nappe de fibres disposée sur l'une des deux surfaces du panneau.

Le défaut principal des techniques de renforcement par couture est leur très longue mise en œuvre en raison du travail de l'aiguille, et au contraire des techniques de renforcement par aiguilletage qui sont de cadence plus élevée.

A l'inverse, le défaut principal des techniques d'aiguilletage est leur caractère aléatoire en ce sens qu'il ne peut être garanti que les barbes des aiguilles entraînent réellement les fibres : dans un tel cas une présence quantifiée des renforts fibreux dans le panneau ne peut être garantie, et au contraire des techniques de renforcement par couture.

Dans les deux cas, ces techniques présentent le défaut supplémentaire de ne pas permettre n'importe quelle distribution des renforts fibreux dans le matériau d'âme, ni même n'importe quelle inclinaison des renforts, et en raison des techniques et équipements de couture (ou d'aiguilletage) utilisés pour insérer ces renforts fibreux dans le panneau du matériau d'âme.

On connait encore du document FR 3.029.834 une technique d'insertion de fils individuels ; qui comprend les étapes suivantes :

- prévoir un panneau, ainsi qu'un élément d'insertion, longitudinal, présentant une extrémité libre,
- prévoir une bobine de fil et dérouler une section de longueur du fil le long et au voisinage du panneau, disposé d'un premier côté (du panneau),
- perforer le panneau avec ledit élément d'insertion, par le déplacement dudit élément d'insertion selon son axe longitudinal, à partir dudit premier côté du panneau et au travers du panneau, et simultanément on emporte le fil par une action de poussée dudit élément d'insertion sur le fil, au niveau de l'extrémité libre dudit élément, et jusqu'à ce que ledit élément d'insertion et le fil ressortent du second côté du panneau et de telle façon à disposer au travers de la perforation du panneau ainsi créée, un brin amont et un brin aval par référence à une boucle du fil ressortant du second côté du panneau,
- couper le fil au niveau du brin amont, du premier côté du panneau, et au niveau de la boucle du second côté du panneau, obtenant une paire de fils individuels au travers de la perforation du panneau, constitués par les brins amont et aval.

Selon les constatations des inventeurs, un tel procédé permet d'assurer la présence d'un élément de renfort individuel formé par deux brins de fils. En revanche, ce procédé selon FR 3029834 est perfectible en ce que la section de l'élément de renfort est sous dimensionnée par rapport à l'alésage perforé. Autrement dit, un tel procédé ne permet pas d'assurer une quantité suffisante de fibres dans les ponts de renforts.

On connait encore du document US2008/0226876A1 un procédé de renforcement d'un panneau composite comprenant une âme et des peaux textiles avec mise en œuvre des étapes suivantes :

- percement simultané du panneau et des peaux en créant un alésage, par l'insertion d'un outil avec une pince,
- saisie de l'extrémité longitudinale d'un élément de renfort par la pince,
- traction de l'élément de renfort, au travers de l'alésage jusqu'à ce que les extrémités de l'élément de renfort, dépassent des deux peaux.

Selon les constatations des inventeurs, un tel procédé selon US2008/0226876A1 assurant l'insertion d'un élément de renfort par traction de son extrémité longitudinale, est peu fiable, en particulier s'il existe des frottements importants entre l'élément de renfort et le panneau dans l'alésage lors de l'insertion. Selon les constatations des inventeurs, un tel procédé ne permet pas d'insérer de manière fiable, automatisée et industrielle un renfort textile, en minimisant le jeu entre l'alésage perforé et l'élément renfort textile.

On connaît encore des documents US.3030.256 B1, WO2006/125562 ou encore EP 3.173.216 A1 un procédé de fabrication d'un matériau cellulaire renforcé comprenant les étapes consistant à :

- produire un trou traversant dans le matériau cellulaire qui s'étend d'une première surface du matériau cellulaire à une seconde surface du matériau cellulaire,
- préparer au moins un faisceau de fibres de l'autre côté de la seconde surface du matériau cellulaire,
- traverser le trou traversant à partir de la première surface afin de saisir le au moins un faisceau de fibres, et
- tirer le au moins un faisceau de fibres dans le trou traversant dans le matériau cellulaire.

Dans ces trois antériorités US.3030.256 B1, WO2006/125562 et EP 3.173.216 A1, l'outil utilisé pour le perçage du trou, et l'outil permettant la saisie pour la traction du faisceau de fibres est un même outil consistant en une aiguille pourvu d'un crochet au niveau de son extrémité. Le crochet de l'aiguille vient saisir le faisceau de fibres, et le tire en formant une boucle.

Comme expliqué en page 7 de la demande WO2006/125562, ou encore au paragraphe 14 du document EP 3.173.216 A1, la section de l'aiguille est volontairement choisie la plus petite possible, notamment de sorte à ce que le trou produit soit de section inférieure au diamètre du faisceau de fibres tiré au travers du trou.

Selon les essais réalisés par les inventeurs, l'utilisation d'une aiguille comme outil de perçage engendre des problèmes dont l'intensité des inconvénients sont croissants avec l'augmentation de la section (ou du diamètre) d'aiguille utilisée et en particulier :

- un risque d'arrachement du matériau cellulaire qui croît en fonction de la section de l'aiguille, en raison du travail de l'aiguille et des contraintes appliqués par l'aiguille au matériau, en particulier lorsque l'aiguille ressort du matériau cellulaire,
- le trou formé par l'aiguille étant obtenu par percement et déformation de la matière cellulaire (sans enlèvement de matière), ce perçage modifie localement la densité du matériau cellulaire au niveau des trous, avec une compression de la matière au voisinage du trou par rapport à la matière cellulaire située plus à distance d'un trou, compression qui peut de plus ne pas être constante suivant l'épaisseur du matériau cellulaire, et encore,
- la compression locale du matériau d'âme suivant son épaisseur donne lieu à des tensions internes qui ne permettent pas de garantir une géométrie de trou cylindrique suivant l'épaisseur.

Suivant les essais réalisés par les inventeurs, une fois ce trou réalisé par le travail de l'aiguille, la géométrie finale du trou est encore impactée par la traction de la boucle de fibres au sein du trou, ce qui donne lieu à des phénomènes d'ovalisation suivant l'épaisseur en particulier pour des mousses polyuréthanes, à savoir qu'après imprégnation de la résine au sein du renfort, la géométrie du renfort ne peut être garantie.

L'utilisation d'une aiguille peut encore donner lieu à des phénomènes de déviation de trajectoire de l'aiguille lors du percement en particulier sur le matériau présente différentes couches de différentes densités, ou encore si le matériau d'âme est recouvert de feuilles de parement métalliques, lorsque la direction d'insertion est inclinée, (non perpendiculaire), localement avec le plan des couches,

Selon les constatations des inventeurs, un tel procédé selon US.3030.256 B1, WO2006/125562 et EP 3.173.216 A1, oblige à renforcer le panneau avec des renforts fibreux de faible section, afin de minimiser les inconvénients, et donc à prévoir une densité surfacique des renforts (nombre de renforts fibreux par rapport à la surface du panneau) de nombre élevé, ce qui a pour inconvénient d'augmenter le temps de fabrication, et donc le coût du produit renforcé.

## Résumé

L'invention vient améliorer la situation.

Selon un premier aspect, il est proposé un procédé de renforcement d'un panneau plan ou préformé en 3D, suivant son épaisseur E :

- une étape a) de fourniture d'un élément de renfort, longiligne, souple, avec deux extrémités longitudinales présentant une longueur L strictement supérieure ou égale au double de l'épaisseur E du panneau au niveau du point d'insertion,
- une étape b) de positionnement et de maintien dudit élément de renfort d'un côté du panneau, dit côté d'insertion,
- une étape c) de saisie de l'élément de renfort, du côté d'insertion en une position de saisie intermédiaire entre les deux extrémités longitudinales de l'élément de renfort,
- une étape d) d'insertion dans laquelle on tire ledit élément de renfort saisi en sa position intermédiaire, au travers d'un alésage traversant le panneau, en repliant l'élément de renfort sur lui-même, et jusqu'à une position finale dans laquelle les deux extrémités longitudinales dépassent de l'alésage du côté d'insertion ou encore sont prévues arasantes du côté d'insertion, une boucle de l'élément de renfort dépassant de l'alésage du côté du panneau opposé au côté d'insertion ou encore étant prévue dans une position à proximité de la paroi extérieure du panneau du côté du panneau opposé au côté d'insertion configurée de sorte qu'une coupe de la boucle divise l'élément de renfort en deux sections de longueur s'étendant chacune au travers de l'alésage, en positionnant les extrémités des deux sections de longueur arasantes à la paroi extérieure du panneau, du côté opposé au côté d'insertion .

Le procédé comprend une étape de formation de l'alésage, préalablement à l'étape d) d'insertion, dans laquelle on fore dans le panneau ledit alésage par l'intermédiaire d'un outil de forage comprenant un corps cylindrique pourvu à sa base d'une arête circulaire de coupe, et dans laquelle on forme l'alésage par un mouvement combinant une avance suivant l'axe du corps cylindrique et une rotation autour de l'axe du corps cylindrique. Eventuellement, on évacue la carotte issue du forage de l'alésage, interne au corps cylindrique, par la mise en pression du corps cylindrique avec un gaz.

Un tel outil de forage comprenant un corps cylindrique pourvu à sa base d'une arête circulaire de coupe présente pour intérêt qu'il permet d'assurer :

- la création d'un alésage (ou trou) de géométrie cylindrique, par enlèvement de matière, générant une carotte interne au corps cylindrique, en minimisant les phénomènes de compression du matériau du panneau et donc les tensions internes au niveau des alésages percés,
- la formation de tels alésages avec minimisation des tensions internes, sans limitation sur la diamètre de l'alésage qui peuvent être de diamètre bien supérieur à ceux crées par le travail d'une aiguille, par exemple de diamètre supérieur ou égal à 2 mm, voir supérieur ou égal 4 mm, voire même supérieur à 6 mm, ou encore supérieure égale à 8 mm, voire supérieure ou égale à 10 mm, et ou encore sans limitation sur l'épaisseur du matériau,
- d'assurer la création d'alésage de trajectoire rectiligne maîtrisée, en minimisant les tensions internes, même si le matériau du panneau est un multicouche, y compris différentes couches superposées de différents matériaux et/de différentes densités, ou encore même si le panneau comprend des feuilles de parement, par exemple métalliques, et même si l'angle de forage n'est pas localement au point de forage perpendiculaire avec la surface du panneau à percer, ou encore localement perpendiculaire aux surfaces intermédiaires des différentes couches.

Garantir un alésage de géomètre cylindrique maitrisé, en minimisant les tensions internes, permet ensuite d'insérer l'élément de renfort, en particulier fibreux, selon l'étape d) avec un garnissage maitrisé en particulier une section

**EP 4 238 745 B1**

de l'élément de renfort maitrisée, mais sans excès de sorte à ne pas perdre la géométrie cylindrique donnant la forme finale des ponts de renfort lors de l'application de la résine.

A cette occasion, on note que la saisie de l'élément de renfort en une position intermédiaire forme une boucle, qui lors de l'étape d) est tirée au travers l'alésage depuis le côté d'insertion du panneau jusqu'au côté du panneau opposé au côté d'insertion, cette boucle saisie par un préhenseur peut générer une contrainte lors de son trajet au travers l'alésage traversant.

Une attention particulière peut être portée pour que la section de cette boucle n'altère pas la géométrie de l'alésage percé, notamment par le choix d'un outil d'insertion spécifique, et qui comprend outre une tige et un préhenseur (en particulier un crochet ou une pince commandée) à l'extrémité de cette tige, un tube. L'ensemble tige et préhenseur est monté coulissant dans le tube, ledit préhenseur étant prévu saillant de l'embouchure du tube lors de la saisie de l'élément de renfort à l'étape c), et dans lequel on rétracte le préhenseur au sein du tube, lorsque le préhenseur est entrainé suivant l'axe de l'alésage, à partir du côté d'insertion vers le côté du panneau opposé à celui de l'insertion lors de l'étape d) d'insertion.

Le diamètre externe du tube est choisi en relation du diamètre de l'alésage, égal ou légèrement inférieur à celui-ci. La rétractation du préhenseur (notamment de la pince commandée ou du crochet) dans le tube permet de contraindre la boucle au sein du tube, et ainsi avantageusement d'éviter des frottements (ou contraintes) lorsque l'outil d'insertion tire cette boucle sur la longueur de l'alésage traversant.

Selon un mode de réalisation, l'étape d) d'insertion est effectuée par la mise en œuvre d'un outil d'insertion qui comprend une tige configurée pour traverser l'alésage du panneau, depuis le côté opposé au côté d'insertion, et en direction du côté d'insertion, la tige étant pourvue d'un crochet à son extrémité distale, saillant du côté d'insertion lorsque le crochet assure la saisie de l'élément de renfort à l'étape c), l'étape d) d'insertion assurant la formation de la boucle autour du crochet lorsque le crochet est entrainé suivant l'axe de l'alésage, à partir du côté d'insertion vers le côté du panneau opposé à celui de l'insertion.

Selon un mode de réalisation, le procédé présente une étape e) de coupe successivement à l'étape d) d'insertion, dans laquelle on sectionne la boucle de l'élément de renfort dans la position finale de l'élément de renfort, divisant l'élément de renfort en deux sections de longueur, s'étendant chacune au travers de l'alésage ; les deux extrémités de chaque section de longueur peuvent être prévues dépassantes des deux côtés du panneau, ou encore arasantes des deux côtés du panneau, ou encore dépassantes d'un côté du panneau et arasantes de l'autre côté du panneau.

Selon un mode de réalisation, l'étape e) de coupe est mise en œuvre par ledit outil d'insertion qui comprend une lame montée sur l'outil d'insertion, mobile par rapport au crochet, et dans laquelle on sectionne la boucle lors de l'étape e) par l'intermédiaire d'un mécanisme d'actionnement configuré pour passer ladite lame d'une position escamotée à distance du crochet, vers une position de coupe dans laquelle ladite lame sectionne la boucle de l'élément de renfort en appui sur le crochet, avec effet de cisaillement entre la lame et le crochet.

Selon un mode de réalisation, l'outil d'insertion comprend la tige et le crochet, mais encore un tube, l'ensemble tige et crochet étant monté coulissant dans le tube, ledit crochet étant prévu saillant de l'embouchure du tube lors de la saisie de l'élément de renfort à l'étape c), et dans lequel on rétracte le crochet au sein du tube, lorsque le crochet est entrainé suivant l'axe de l'alésage, à partir du côté d'insertion vers le côté du panneau opposé à celui de l'insertion lors de l'étape d) d'insertion.

Alternativement, l'étape d) d'insertion est effectuée par la mise en œuvre d'un outil qui comprend une tige configurée pour traverser l'alésage du panneau depuis le côté opposé au côté d'insertion et en direction du côté d'insertion, ladite tige étant pourvue d'une pince commandée à son extrémité distale, saillante du côté d'insertion lorsque la pince commandée assure la saisie de l'élément de renfort à l'étape c).

La pince commandée comprend deux mors configurés pour passer d'une position d'ouverture autorisant le positionnement de l'élément de renfort entre les deux mors jusqu'à une position de fermeture dans laquelle les deux mors se referment sur l'élément de renfort en l'agrippant.

L'étape d) d'insertion assure la formation de la boucle autour de la pince commandée lorsque la pince est entrainée suivant l'axe de l'alésage, à partir du côté d'insertion vers le côté du panneau opposé à celui de l'insertion.

En particulier, l'outil d'insertion peut comprendre la tige et la pince commandée mais encore un tube, l'ensemble tige et pince commandée étant monté coulissant dans le tube, ladite pince commandée étant prévue saillante de l'embouchure du tube lors de la saisie de l'élément de renfort à l'étape c), et dans lequel on rétracte la pince commandée au sein du tube, lorsque la pince commandée est entrainée suivant l'axe de l'alésage, à partir du côté d'insertion vers le côté du panneau opposé à celui de l'insertion lors de l'étape d) d'insertion.

Selon un mode de réalisation, les deux mors de la pince commandée sont formés par des éléments élastiquement déformables qui, lorsque saillants de l'embouchure du tube, contraignent les mors, grâce à l'élasticité des éléments élastiquement déformables, dans la position d'ouverture où les mors s'étendent radialement au-delà du rayon intérieur du tube, l'outil d'insertion étant configuré de sorte que le passage des mors de la position d'ouverture jusqu'à la position de fermeture est provoqué lors de la rétractation de la pince au sein du tube au cours de laquelle les deux mors sont contraints par le tube à se refermer l'un sur l'autre lors du coulissement de la tige au sein du tube.

Avantageusement, l'étape e) de coupe peut être mise en œuvre par ledit outil d'insertion qui comprend une lame montée dans le tube, mobile par rapport la pince, et dans laquelle on sectionne la boucle lors de l'étape e) par l'intermédiaire d'un mécanisme d'actionnement configuré pour passer ladite lame d'une position escamotée à distance de la pince au sein du tube dans la position de fermeture des mors, jusqu'à une position de coupe dans laquelle ladite lame sectionne la boucle de l'élément de renfort en prise avec la pince au sein du tube, avec effet de cisaillement entre la lame et la pince commandée.

Avantageusement, la lame peut être agencée coulissante en une position intermédiaire entre les deux mors, configurée pour venir sectionner la boucle de l'élément de renfort selon un plan de coupe intercalé entre les deux mors de la pince alors en position de fermeture sur l'élément de renfort.

Selon une alternative de réalisation, l'étape e) est mise en œuvre alors que la boucle est positionnée saillante du panneau du côté du panneau opposé au côté d'insertion dans la position finale de l'élément de renfort, par un outil de coupe distinct de l'outil d'insertion venant sectionner la boucle selon un plan de coupe intermédiaire entre le crochet (ou la pince commandée) de l'outil d'insertion et la paroi extérieure du panneau, la coupe générant une chute formée par le repli de boucle

Selon un mode de réalisation, la position intermédiaire de la saisie est le milieu de l'élément de renfort, ou encore une position voisine du milieu de l'élément de renfort, à une distance de plus ou moins 20% de longueur L de l'élément de renfort par rapport à son milieu. Selon un mode de réalisation, l'élément de renfort est un ensemble de fils, juxtaposés, s'étendant en longueur sur la longueur L de l'élément de renfort. Eventuellement, mais non nécessairement, les fils de l'ensemble peuvent être torsadés entre eux suivant la longueur de l'élément de renfort.

Selon la présente divulgation, ladite étape b) de positionnement et de maintien est mise en œuvre par l'intermédiaire d'un mécanisme de maintien comprenant deux pinces, configurées pour maintenir ledit élément de renfort en deux positions, de part et d'autre, du milieu de l'élément de renfort suivant sa longueur. La saisie de l'élément de renfort à l'étape c) est obtenue alors que le crochet de l'outil d'insertion est saillant du côté d'insertion, par déplacement des pinces en prise avec l'élément de renfort depuis une position pour laquelle l'élément de renfort ne traverse pas le crochet vers une position dans laquelle une partie intermédiaire telle que le milieu dudit élément de renfort traverse le crochet.

Selon la présente divulgation, on prévoit des moyens robotisés et/ ou automatisés de manière à assurer :

- différents positionnements dudit outil d'insertion par rapport au panneau,
- différentes inclinaisons dudit outil d'insertion par rapport au panneau et de telle sorte à permettre l'insertion d'une pluralité d'éléments de renfort selon une distribution spatiale des points d'insertion paramétrable et selon des inclinaisons réglables.

En particulier on prévoit un support de panneau, les moyens robotisés comprenant, disposés de part et d'autre du support de panneau :

- un premier bras robotisé, manipulant l'outil d'insertion, et
- un deuxième bras robotisé, manipulant les deux pinces du mécanisme de maintien.

Selon un deuxième aspect, l'invention concerne encore un procédé de fabrication de panneau composite mettant en œuvre le procédé de renforcement de panneau suivant son épaisseur conforme à l'invention pour, réaliser des insertions d'éléments de renfort dans un panneau, chaque élément de renfort étant saillant des deux côtés du panneau, ou encore prévu arasant des deux côtés du panneau, ou encore saillant d'un côté du panneau et arasant de l'autre côté du panneau, et dans lequel on ajoute deux peaux, contre les deux côtés du panneau, la face interne de chaque peau tournée vers le panneau en contact avec les parties saillante(s)/arasante(s) des éléments de renfort, puis on injecte une résine sous vide venant imprégner les peaux et les éléments de renforts au sein du panneau, avec création de ponts de renfort au travers des alésages des panneaux, chaque pont de renfort comprenant un élément de renfort imprégné de résine, le panneau composite étant obtenu, après polymérisation de la résine, avec deux peaux liées par leur face interne respectivement aux deux côtés du panneau, et la présence de ponts de renfort sous forme de l'élément de renfort imprégné de résine joignant les deux peaux entre elles.

Selon un troisième aspect, l'invention concerne encore un procédé de fabrication de panneau composite mettant en œuvre le procédé de renforcement de panneau conforme à l'invention, pour réaliser des insertions d'éléments de renfort dans un panneau chaque élément de renfort étant saillant des deux côtés du panneau, ou encore prévu arasant des deux côtés du panneau, ou encore saillant d'un côté du panneau et arasant de l'autre côté du panneau, et dans lequel on ajoute deux peaux, contre les deux côtés du panneau, la face interne de chaque peau tournée vers le panneau en contact avec les parties saillante(s)/arasante(s) des éléments de renfort, et dans lequel les éléments de renfort et les deux peaux comprennent des fibres de renfort, et des fibres thermoplastiques et dans lequel on chauffe l'ensemble peaux et panneau renforcé par les éléments de renfort, jusqu'à obtenir la fusion des fibres thermoplastiques, le panneau composite étant obtenu, après solidification par refroidissement du polymère thermoplastique, avec deux peaux liées par leur face interne respectivement aux deux côtés du panneau, et la présence de ponts de renfort sous forme des fibres de renfort des éléments de renfort imprégnées de polymère thermoplastique joignant les deux peaux entre elles.

Selon un quatrième aspect, l'invention concerne encore un procédé de fabrication de panneau composite mettant en œuvre le procédé de renforcement de panneau suivant son épaisseur conforme à l'invention, pour réaliser des insertions d'éléments de renfort dans un panneau, chaque élément de renfort étant saillant des deux côtés du panneau, ou encore prévu arasant des deux côtés du panneau, ou encore saillant d'un côté du panneau et arasant de l'autre côté du panneau, et dans lequel on ajoute deux peaux, contre les deux côtés du panneau, la face interne de chaque peau tournée vers le panneau en contact avec les parties saillante(s)/arasante(s) des éléments de renfort, puis on injecte sous une pression supérieure à la pression atmosphérique une résine au niveau de points d'injection dans un moule, la pression d'injection inférieure ou égale 3 bars, le moule maintenu sous vide entre 0,2 et 0,3 bar en dessous de la pression atmosphérique, la résine venant imprégner les peaux et les éléments de renforts au sein du panneau, avec création de ponts de renfort au travers des alésages des panneaux, chaque pont de renfort comprenant un élément de renfort imprégné de résine, le panneau composite étant obtenu, après polymérisation de la résine, avec deux peaux liées respectivement aux deux côtés du panneau, par leur face interne, et la présence de ponts de renfort sous forme de l'élément de renfort 1 imprégné de résine joignant les peaux entre elles.

Selon un cinquième aspect, l'invention concerne encore un panneau composite obtenu selon le procédé fabrication de panneau composite objet du deuxième aspect, du troisième aspect ou encore du quatrième aspect, le panneau composite comprenant deux peaux liées par leur face interne respectivement aux deux côtés du panneau, et la présence de ponts de renfort sous forme des fibres de renfort des éléments de renfort imprégnées de résine joignant les deux peaux entre elles ; ledit panneau composite présentant les caractéristiques suivantes :

- une épaisseur E du panneau , hors peaux, comprise entre 30 mm et 300 mm, en particulier comprise entre 50 mm et 200 mm,
- des ponts de renfort, cylindriques de diamètre compris entre 2,5 mm et 12,5 mm,
- un taux de fibre de renfort dans les ponts de renfort compris entre 30% et 80% en volume, et par exemple entre 40% et 80%, voire entre 50% et 70%.

Les caractéristiques exposées dans les paragraphes précédents peuvent, optionnellement, être mises en œuvre. Elles peuvent être mises en œuvre indépendamment les unes des autres ou en combinaison les unes avec les autres.

## Brève description des dessins

D'autres caractéristiques, détails et avantages apparaîtront à la lecture de la description détaillée ci-après, et à l'analyse des dessins annexés, sur lesquels :

**Fig. 1**

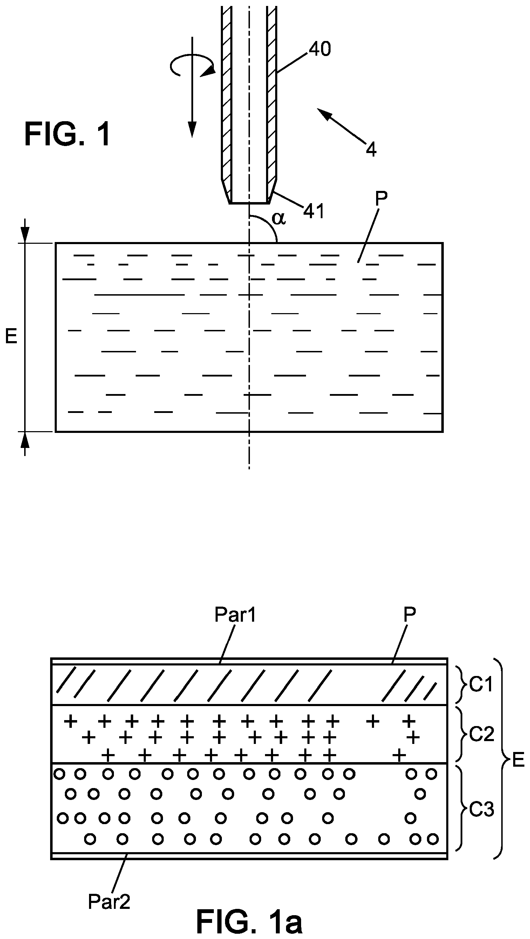

[Fig. 1] illustre schématiquement un outil de forage pour la mise en œuvre du procédé de renforcement, selon un mode de réalisation, avec un corps cylindrique pourvu d'une extrémité de coupe circulaire à sa base, l'outil de forage étant déplacé selon un mouvement combinant, d'une part, une translation selon l'axe du corps cylindrique provoquant l'avance de l'extrémité de coupe en direction du panneau, et, d'autre part, une rotation autour de l'axe du corps cylindrique pour obtenir l'alésage, l'axe de l'outil de forage étant orienté d'un angle α, réglable, , ledit panneau étant illustré à titre d'exemple comme un panneau mono-matériau.

**Fig. 1a**
[Fig. 1a] montre schématiquement la section d'un panneau multi-matériaux comprenant plusieurs couches de matériaux, y compris deux feuilles de parement, qui peut être renforcé avec le procédé divulgué par la présente demande, et en alternative du panneau mono-matériau de la figure 1.

**Fig. 2**

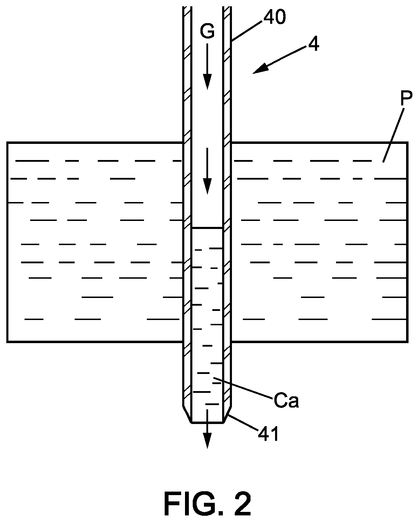

[Fig. 2] est une vue du procédé consécutive à la figure 1, l'outil de forage ayant traversé le panneau avec réalisation de l'alésage, un gaz sous pression étant injecté au sein du corps cylindrique pour provoquer l'expulsion de la carotte interne au corps cylindrique.

**Fig. 3**

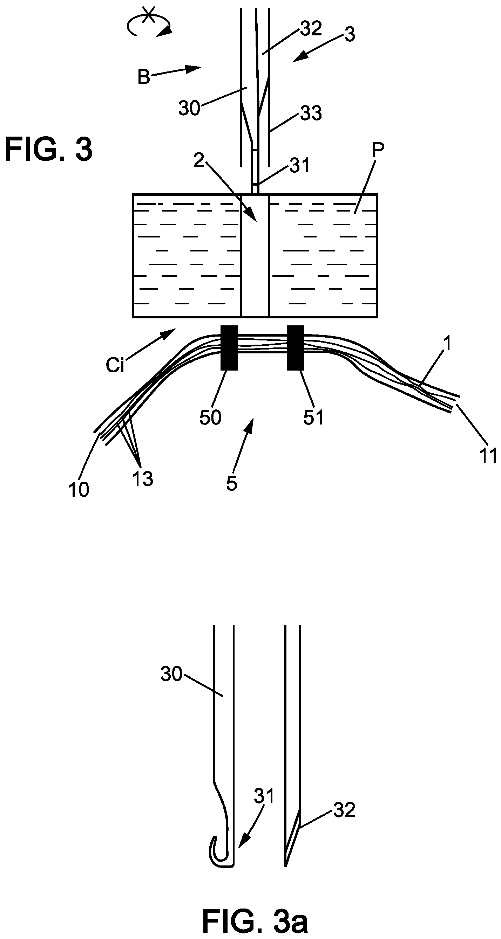

[Fig. 3] est une vue du procédé consécutive à la figure 2, une fois l'alésage foré, illustrant ladite étape b) de positionnement et de maintien dudit élément de renfort d'un côté du panneau, dit côté d'insertion, au moyen d'un mécanisme de maintien comprenant deux pinces, maintenant un élément de renfort, sous forme d'un toron de fils, suivant deux positions, locales, de part et d'autre du milieu de l'élément de renfort, un outil d'insertion comprenant une tige pourvue d'un crochet, une lame de coupe et un tube, étant positionné du côté du panneau opposé au côté d'insertion.

**Fig. 3a**

[Fig. 3a] est une vue en éclaté de l'ensemble tige/crochet et lame dudit outil d'insertion.

**Fig. 4**

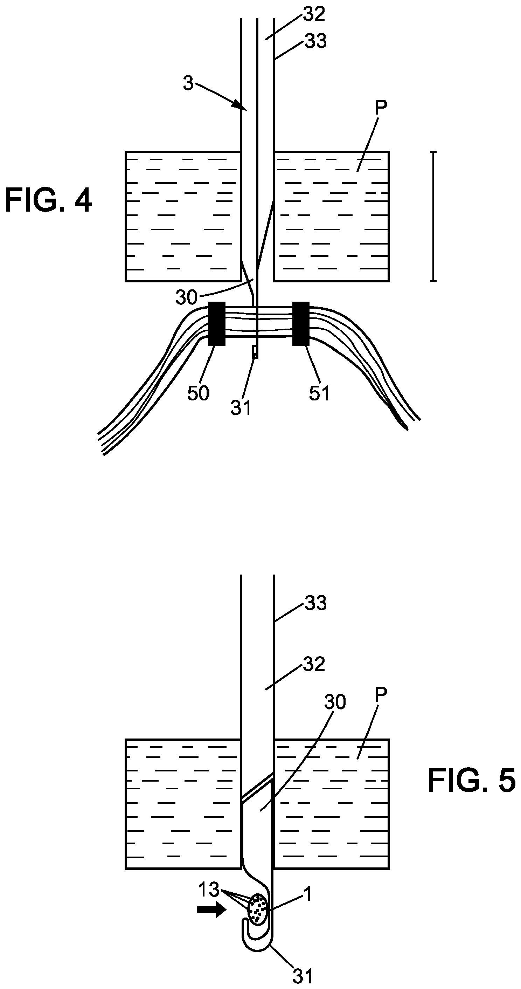

[Fig. 4] est une vue du procédé consécutive à la figure 3, l'outil d'insertion ayant traversé le panneau jusqu'à ce que le crochet soit saillant du panneau, du côté d'insertion.

**Fig. 5**

[Fig. 5] est une vue consécutive à la figure 3, lorsque le mécanisme de maintien déplace l'élément d'insertion depuis la position selon la figure 4 où l'élément de renfort ne traverse pas le crochet vers une position où le milieu de l'élément de renfort traverse le crochet.

**Fig. 6**

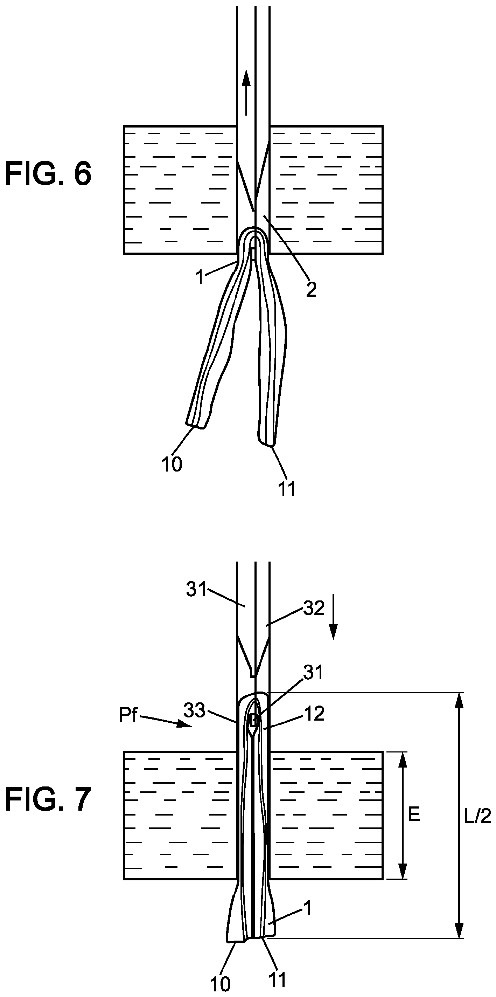

[Fig. 6] est une vue consécutive de la figure 5 pour laquelle le crochet tire l'élément de renfort en son milieu au travers de l'alésage, provoquant le repliement de l'élément de renfort sur lui-même avec formation d'une boucle autour du crochet.

**Fig. 7**

[Fig. 7] est une vue consécutive à la figure 6, le crochet ayant tracté l'élément de renfort plié en deux, dans une position finale pour laquelle deux extrémités longitudinales de l'élément de renfort font saillie du côté d'insertion, la boucle de l'élément de renfort, faisant saillie du côté opposé à celui au côté d'insertion.

**Fig. 8**

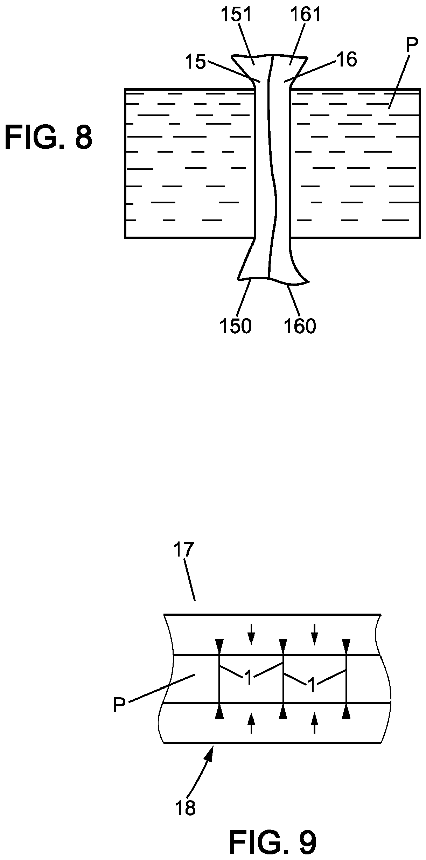

[Fig. 8] est une vue du procédé consécutive de la figure 7, après que la lame de l'outil d'insertion ait sectionnée la boucle de l'élément de renfort, dans ladite position finale, (outil d'insertion non illustré), l'élément de renfort, étant divisé en deux sections de longueur, chacune présentant deux extrémités saillantes de chaque côté du panneau.

**Fig. 9**

[Fig. 9] est une vue d'un panneau renforcé comprenant plusieurs éléments de renfort 1, selon la figure 8, par mise en œuvre du procédé de renforcement, et l'ajout de deux peaux, textiles sur chacun des côtés du panneau, la face intérieure de chaque peau étant destinée à être en contact avec les extrémités saillantes des éléments de renfort.

**Fig. 10**

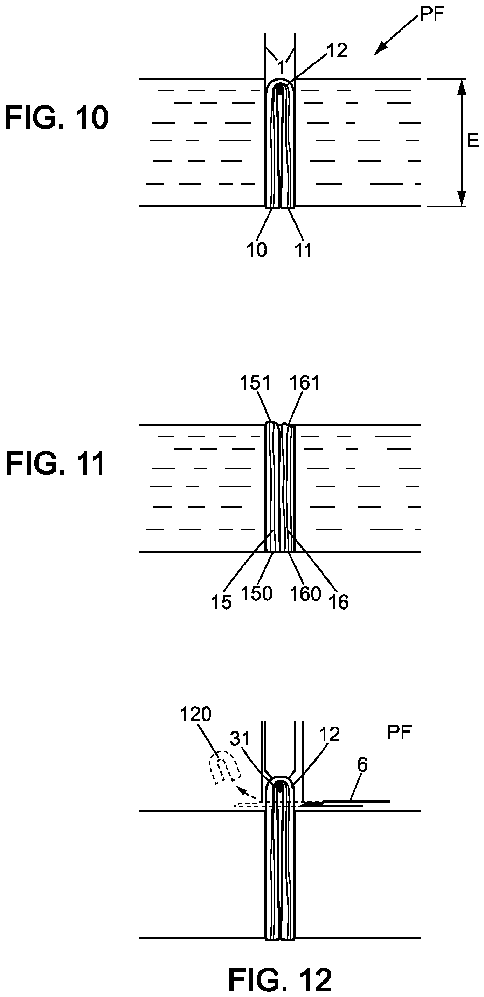

[Fig. 10] est une vue consécutive à la figure 6 (en alternative de la figure 7), le crochet ayant tracté l'élément de renfort plié en deux, dans une position finale pour laquelle deux extrémités longitudinales de l'élément de renfort sont arasantes du côté d'insertion, et la boucle de l'élément de renfort, positionnée à proximité du panneau du côté du panneau opposé au côté d'insertion, légèrement intérieur au panneau

**Fig. 11**

[Fig. 11] est une vue du procédé consécutive de la figure 10, après que la lame de l'outil d'insertion a sectionné la boucle de l'élément de renfort, dans ladite position finale, (outil d'insertion non illustré), l'élément de renfort, étant divisé en deux sections de longueur, chacune présentant deux extrémités arasantes de chaque côté du panneau.

**Fig. 12**

[Fig. 12] est une vue du procédé consécutive de la figure 7 dans ladite position finale de l'élément de renfort (en alternative à la figure 8) pour laquelle le coupe est réalisée par une lame de l'outil d'insertion, la figure 12 illustrant plus particulièrement un outil de coupe, de manière notable distinct de l'outil d'insertion sectionnant la boucle dans une position intermédiaire entre le crochet de l'outil d'insertion et la surface extérieure du panneau, du côté opposé à celui de l'insertion, générant une chute formée par la boucle sectionnée.

**Fig. 13**

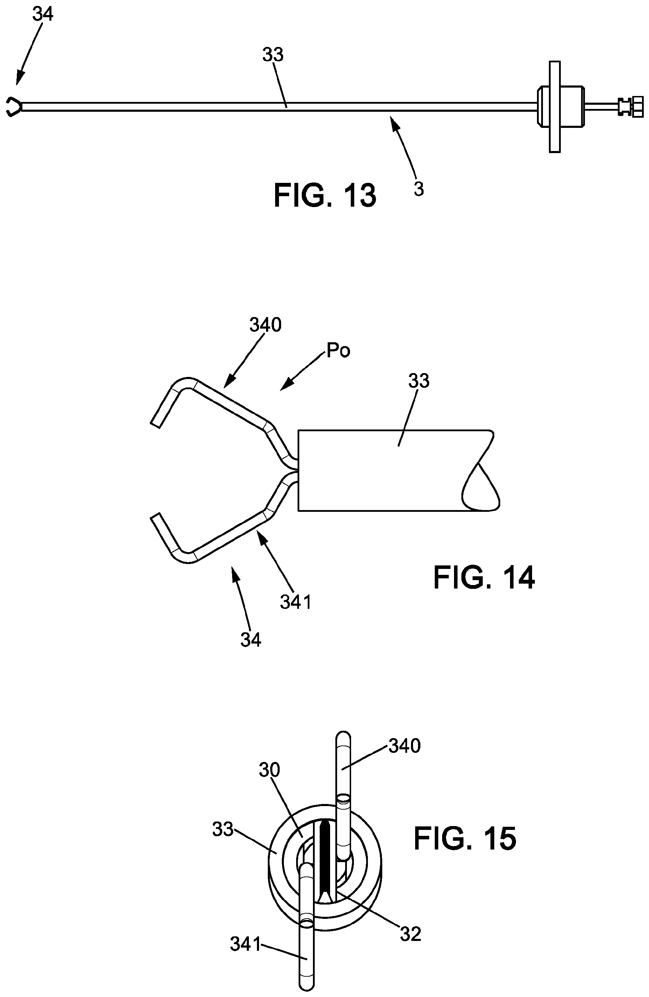

[Fig. 13] est une vue du procédé selon la présente divulgation selon une alternative de réalisation pour laquelle on choisit un outil de préhension comprenant une tige pourvue à son extrémité d'une pince commandée, comprenant deux mors configurés pour passer d'une position d'ouverture autorisant la saisie de l'élément de renfort jusqu'à une position de fermeture agrippant l'élément de renfort.

**Fig. 14**

[Fig. 14] est une vue de détail de la pince commandée de l'outil d'insertion selon la figure 13 dont les deux mors sont des éléments élastiquement déformables dont l'élasticité contraint les mors dans la position d'ouverture.

**Fig. 15**

[Fig. 15] est une vue de détail et de face de la pince commandée de l'outil d'insertion selon la figure 13 illustrant les deux mors en position d'ouverture, mais encore en arrière-plan, le tube et à l'intérieur de celui-ci, une lame de coupe située dans un plan intermédiaire entre les deux mors.

**Fig. 16**

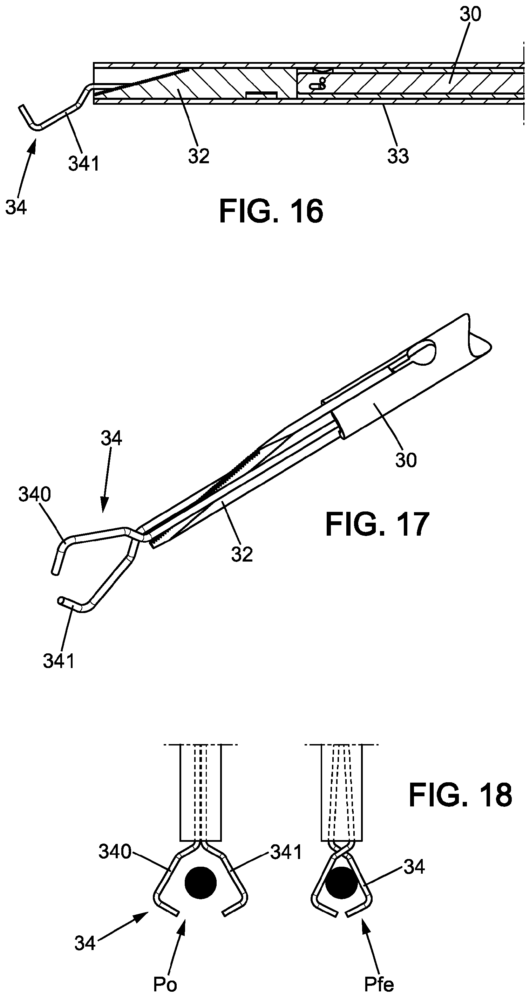

[Fig. 16] est une vue de coupe de l'outil d'insertion de la figure 13, illustrant la tige interne au tube, la fixation des éléments élastiquement déformables à l'extrémité de la tige, la lame de coupe, et l'un des deux mors.

**Fig. 17**

[Fig. 17] est une vue partielle de l'outil d'insertion de la figure 13, illustrant la tige, les éléments élastiquement déformables fixés à l'extrémité de la tige, la lame de coupe, et les deux mors (le tube étant caché)

**Fig. 18**

[Fig. 18] sont deux vues, illustrant schématiquement le passage des mors de la pince commandée de la position ouverture (vue de gauche) vers la position de fermeture (vue de droite), obtenu lors de la rétraction de la pince au sein du tube par l'action du tube qui les éléments élastiquement déformables à se refermer l'une sur l'autre.

**Fig. 19**

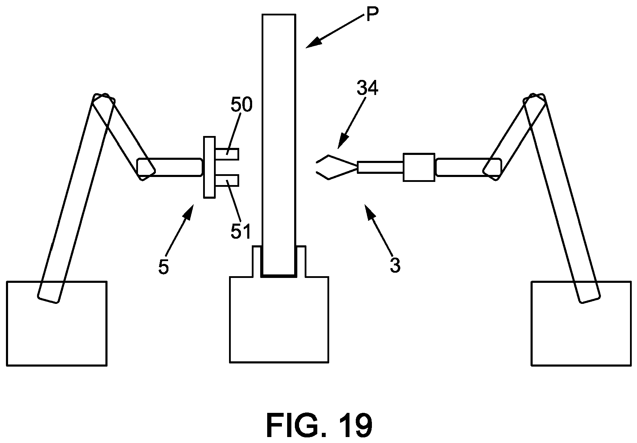

[Fig. 19] est une vue schématique d'une installation robotisée convenant pour la mise en œuvre du procédé de renforcement et qui comprend un support de panneau, les moyens robotisés comprenant, disposés de part et d'autre du support de panneau un premier bras robotisé manipulant l'outil d'insertion, et un deuxième bras robotisé, manipulant les deux pinces du mécanisme de maintien.

## Description des modes de réalisation

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.

Aussi, l'invention est relative à un procédé de renforcement d'un panneau P suivant son épaisseur E :

- une étape a) de fourniture d'un élément de renfort 1, longiligne, souple, avec deux extrémités longitudinales 10, 11 présentant une longueur L strictement supérieure ou égale au double de l'épaisseur E du panneau P au niveau du point d'insertion,,
- une étape b) de positionnement et de maintien dudit élément de renfort 1 d'un côté du panneau, dit côté d'insertion Ci
- une étape c) de saisie de l'élément de renfort 1, en une position de saisie intermédiaire entre les deux extrémités longitudinales de l'élément de renfort 1 telle qu'en son milieu, du côté d'insertion Ci,
- une étape d) d'insertion dans laquelle on tire ledit élément de renfort saisi en la position intermédiaire de l'élément de renfort, au travers d'un alésage 2 traversant le panneau, en repliant l'élément de renfort sur lui-même, et jusqu'à une position finale Pf dans laquelle les deux extrémités longitudinales 10, 11 dépassent de l'alésage 2 du côté d'insertion Ci ou encore sont prévues arasantes du côté d'insertion Ci, une boucle 12 de l'élément de renfort dépassant de l'alésage 2 du côté du panneau opposé au côté d'insertion Ci, ou encore la boucle 12 étant prévue dans une position à proximité du panneau du côté du panneau opposé au côté d'insertion, notamment légèrement intérieure, configurée de sorte qu'une coupe (sans chute) de la boucle divise l'élément de renfort en deux sections de longueur 15,16 s'étendant chacune au travers de l'alésage, en positionnant les extrémités 151, 161 des deux sections de longueur 15,16 arasantes à la paroi du panneau du côté opposé au côté d'insertion Ci.

La position intermédiaire de la saisie à l'étape c) de saisie peut être le milieu de l'élément de renfort, ou encore une position voisine du milieu de l'élément de renfort 1, par exemple à une distance de plus ou moins 20% de longueur L de l'élément de renfort par rapport à son milieu.

Avantageusement, ce mode d'insertion permet de tirer fortement sur l'élément de renfort 1, (sans perte de fibres) qui se replie en deux avec formation de la boucle 12 au cours de l'étape d), et jusqu'à sa position finale Pf telle qu'illustrée à la figure 7 à titre d'exemple : un tel mode d'insertion permet l'insertion d'un élément de renfort notamment formé d'un ensemble de fils 13 juxtaposé, s'étendant en longueur sur la longueur L de l'élément de renfort 1. Eventuellement, mais non nécessairement les fils 13 de l'ensemble sont torsadés entre eux suivant la longueur de l'élément de renfort.

Les fils 13 peuvent être des fils en fibres de verre, des fils en fibres de carbone, des fils en fibres d'aramide, des fils en fibres végétales, par exemple comme le lin, ou encore des fils en fibres polyester. Cette liste est donnée à titre d'exemple, et n'est pas limitative sur les matériaux possibles pour les fibres des fils.

A ce sujet, la figure 7 illustre un exemple de réalisation pour lequel, à l'issue de la traction de l'étape d), l'élément de renfort est dépassant des deux côtés du panneau, les deux extrémités longitudinales de l'élément de renfort dépassant du côté d'insertion Ci, la boucle 12 dépassant du côté opposé à celui d'insertion. Dans un tel cas la longueur L de l'élément de renfort 1 est strictement supérieure au double de l'épaisseur E du panneau, au niveau du point d'insertion.

Selon d'autres possibilités : prises seules, ou en combinaison :

- à l'issue de la traction de l'étape d), l'élément de renfort 1 peut être arasant du côté d'insertion Ci en tirant l'élément de renfort de la course juste nécessaire pour que les deux extrémités longitudinales soient arasantes de la paroi du panneau, du côté d'insertion Ci (voir figure 10),
- à l'issue de la traction de l'étape d), la boucle 12 de l'élément de renfort peut être prévue dans une position à proximité du panneau du côté du panneau opposé au côté d'insertion, notamment légèrement intérieure au panneau configurée de sorte qu'une coupe de la boucle (sans chute) divise l'élément de renfort en deux sections de longueur 15,16 s'étendant chacune au travers de l'alésage, en positionnant les extrémités 151, 161 des deux sections de longueur 15,16 arasantes à la paroi extérieure du panneau du côté opposé au côté d'insertion Ci (voir figures 10 et 11).

Dans ce cas particulier illustré au figure 10 et 11, avec insertion d'un élément de renfort suivant une direction sensiblement perpendiculaire au plan moyen ou à la surface moyenne (surface neutre) du panneau, au niveau du point d'insertion, la longueur de l'élément de renfort peut être égale au double de l'épaisseur E du panneau. Dans un tel cas, la saisie de l'élément de renfort est effectuée en le milieu dudit élément de renfort 1.

A l'issue du procédé de renforcement, chaque élément de renfort 1 peut être :

- saillant des deux côtés du panneau comme illustré à la figure 8, une fois la boucle 12 coupée, ou encore,
- prévu arasant des deux côtés du panneau comme illustré à la figure 11, une fois la boucle coupée, ou encore,
- saillant d'un côté du panneau et arasant de l'autre côté du panneau (mode de réalisation non illustré), respectivement du côté d'insertion et du côté du panneau opposé au côté d'insertion (ou inversement).

Le résultat de la figure 11, avec la présence de deux sections de longueur 15,16 dont les extrémités 150,151 ; 160,161 sont arasantes des deux côtés du panneau, peut encore être obtenu à partir du résultat de la figure 8, en arasant les extrémités dépassantes de la figure 8, à l'aide d'un outil de coupe distinct de l'outil d'insertion.

Par exemple, l'ensemble de fils peut présenter les caractéristiques suivantes :

- nombre de fils compris entre 10 et 600,
- chaque fil présentant un titrage (tex) correspondant au poids en grammes de 1000 mètres de fil compris entre 200 tex et 35000 tex.

Le panneau destiné à former l'âme du panneau composite peut être mono-matériau, et comme illustré à la figure 1. Le matériau d'âme renforcé par l'insertion d'un (ou plusieurs) élément de renfort peut être, à titre d'exemple non limitatif, un panneau de mousse cellulaire tel que des mousses polyéthylène (PE), des mousses polyéthylène téréphtalate (PET), des mousses polyuréthanes (PUR), des mousses acryliques, des mousses bio-sourcées, des mousses polyméthacrylimide (PMI) et également des matériaux divers tel que le liège par exemple. Selon un autre mode de réalisation illustré à titre indicatif à la figure 1a, le panneau P peut être multicouches C1, C2, C3, voire multi-matériaux, voire comprendre par exemple des feuilles de parement Par 1, Par 2. Le panneau peut par exemple présenter plusieurs couches C1, C2, C3, de nombres compris entre 2 et N (entier supérieur à 3), de différentes caractéristiques, par exemple plusieurs couches C1 à C3 en superposition de mousses plastiques, de différentes densités et/ou de différents matériaux (mousse polyéthylène ou encore une mousse de polyuréthane ; mousses polyuréthanes (PUR), des mousses acryliques, des mousses bio-sourcées,...). Les feuilles de parement sont d'épaisseur très inférieure (par exemple un rapport 100) à l'épaisseur du panneau entre les feuilles de parement, voire même à l'épaisseur de chaque couche C1 à C3. Les feuilles de parement peuvent par exemple être des feuilles métalliques, par exemple aluminium.

Le panneau destiné à former l'âme du panneau composite peut être un panneau plan, tel qu'illustré aux figures, ou encore préformé en 3D, par exemple à la forme d'un nez d'avion, ou encore la coque courbe d'un bateau. Les étapes a), b), c), d), précitées peuvent être mises en œuvre sur un panneau plan ou panneau préformé (3D).

Dans le cas d'un panneau préformé 3D, on entend par surface moyenne la surface qui correspond à celle passant par le milieu de l'épaisseur du panneau qui est parallèle aux surfaces extérieures du panneau au point d'insertion. Dans le cas d'un panneau plan, cette surface moyenne est le plan moyen qui est parallèle au plan du panneau.

L'épaisseur P du panneau peut être comprise entre 30 mm et 300 mm et notamment supérieure ou égale à 40 mm, voire supérieur ou égale à 50 mm.

Selon un mode de réalisation, l'étape d) d'insertion est effectuée par la mise en œuvre d'un outil d'insertion 3 qui comprend, par exemple, une tige 30 configurée pour traverser l'alésage 2 du panneau depuis le côté opposé au côté d'insertion Ci en direction du côté d'insertion. Cette tige 30 est pourvue d'un crochet 31 à son extrémité distale saillant du côté d'insertion Ci lorsque le crochet 31 assure la saisie de l'élément de renfort à l'étape c), et tel qu'illustré à la figure 5.

L'étape d) d'insertion avec traction de la boucle 12 assure alors la formation de la boucle 12 autour du crochet 31 lorsque le crochet est entrainé dans l'alésage suivant son axe, à partir du côté d'insertion Ci vers le côté du panneau opposé à celui de l'insertion, et comme illustré aux figures 6 et 7, ou encore aux figures 6 et 10. A l'issue de la traction de l'étape d), la boucle 12 peut être dépassante du côté du panneau opposé au côté d'insertion, telle qu'illustrée à la figure 7, ou encore être positionnée à proximité du côté du panneau opposé au côté d'insertion, notamment légèrement intérieur au matériau d'âme tel qu'illustré à la figure 10

Selon un mode de réalisation, le procédé peut présenter une étape de formation de l'alésage, préalablement à l'étape d) d'insertion, dans laquelle on fore dans le panneau P ledit alésage 2 par l'intermédiaire d'un outil de forage 4. De préférence, la formation de l'alésage n'est donc pas obtenue par l'outil d'insertion, mais par un outil de forage, spécifique, distinct de l'outil d'insertion.

L'outil de forage 4 peut comprendre un corps cylindrique 40 pourvu à sa base d'une arête circulaire de coupe 41. On forme l'alésage par un mouvement combinant une avance suivant l'axe du corps cylindrique 40 et une rotation autour de l'axe du corps cylindrique 41, et comme illustré à la figure 1, et jusqu'à ce que l'outil de forage traverse la panneau, comme illustré à la figure 2.

L'arête circulaire de coupe 41, peut être formée par un biseau, qui peut être un biseau extérieur, et comme visible à la figure 1. Un biseau extérieur permet de ne pas comprimer la carotte dans le creux du corps cylindrique au cours du forage, et contrairement à un biseau intérieur. L'évacuation de la carotte en est ensuite facilitée.

Pendant son avance, l'outil de forage 4 peut être sensiblement perpendiculaire au plan moyen (ou à la surface moyenne) du panneau ($\alpha$ =90°), ou encore incliné par rapport au plan moyen (ou à la surface moyenne) du panneau soit un angle $\alpha$ strictement inférieur à 90°, par exemple compris entre 45° et 90° à titre d'exemple non limitatif.

A l'issue de l'étape de forage, on peut évacuer la carotte issue du forage de l'alésage, interne au corps cylindrique, par la mise en pression du corps cylindrique avec un gaz G, et comme illustré à la figure 2. La mise en pression du gaz, interne au corps cylindrique génère une force sur la carotte Ca assurant son éjection au travers de l'arête circulaire de coupe.

Le diamètre extérieur du corps cylindrique 40 de l'outil de forage 4 est typiquement compris entre 4 mm et 14 mm, et /ou le diamètre intérieur du corps cylindrique est typiquement compris entre 3 mm et 12,5 mm.

La définition de la plage de diamètres (extérieur et intérieur du corps cylindrique) d'outils dépend également de l'épaisseur E du matériau d'âme, à savoir le panneau. A titre d'exemple, on peut projeter :

[Tableau 1]

| E (mm) | 30 à 40 | 50 | 60 | 70 | 80 | 90 | 100 | 110 à 150 | 160 à 200 | 210 | 220 | 230 à 300 |
|---|---|---|---|---|---|---|---|---|---|---|---|---|
| Ø Ext / int (mm) | 4/3 | 4/3 | | | | | | | | | | |
| | | 6/5 | 6/5 | 6/5 | 6/5 | | | | | | | |
| | | | | | 8/7 ou 8/6,5 ou 8/6 | 8/7 ou 8/6,5 ou 8/6 | 8/7 ou 8/6,5 ou 8/6 | | | | | |
| | | | | | | | | 10/9 ou 10/8,5 ou 10/8 | 10/9 ou 10/8,5 ou 10/8 | | | |
| | | | | | | | | | | 12/10,5 ou 12/10 | 12/10,5 ou 12/10 | |
| | | | | | | | | | | | 14/12,5 ou 14/12 | 14/12,5 ou 14/12 |

Plus l'épaisseur du panneau sera importante, plus le chemin à parcourir pour l'outil sera important également et davantage avec des insertions en oblique. S'en suit également une augmentation des tubes des outils de carottage pour augmenter leur stabilité et rigidité à la pénétration dans le matériau d'âme.

Selon un mode de réalisation, ladite étape b) de positionnement et de maintien est mise en œuvre par l'intermédiaire d'un mécanisme de maintien 5 comprenant deux pinces 50, 51, configurées pour maintenir ledit élément de renfort 1 en deux positions, de part et d'autre, du milieu de l'élément de renfort 1 suivant sa longueur.

L'outil d'insertion qui comprend la tige 30 est alors actionné pour traverser l'alésage 2 du panneau depuis le côté opposé au côté de l'insertion Ci en direction du côté d'insertion et jusqu'à ce que le crochet 31 à son extrémité distale soit saillant du côté d'insertion Ci, et comme illustré à la figure 4.

La saisie de l'élément de renfort 1 à l'étape c) de saisie peut être obtenue alors que le crochet 31 de l'outil d'insertion est saillant du côté d'insertion, par déplacement des pinces 50,51 en prise avec l'élément de renfort 1 depuis une position pour laquelle l'élément de renfort ne traverse pas le crochet (i.e figure 4) vers une position dans laquelle une partie intermédiaire telle que le milieu dudit élément de renfort 1 traverse le crochet (i.e. figure 5).

Selon un mode de réalisation, l'outil d'insertion 3 peut comprendre la tige 30 et le crochet 31, mais encore un tube 33, l'ensemble tige 30 et crochet 31 étant monté dans le tube 33, notamment de manière coulissant par rapport au tube. Le diamètre du tube est dimensionné par rapport au diamètre de l'outil de forage, à savoir sensiblement égal ou inférieur au diamètre du corps cylindrique 40.

Le crochet 31 est prévu saillant de l'embouchure du tube 33 lors de la saisie de l'élément de renfort à l'étape c). Lorsque le crochet 31 et la tige 30 sont montés coulissant par rapport au tube 33 on rétracte le crochet 31 au sein du tube 33, à savoir lorsque le crochet 31 est entrainé suivant l'axe de l'alésage, à partir du côté d'insertion vers le côté du panneau opposé à celui de l'insertion lors de l'étape d) d'insertion. Ainsi à la position finale Pf, on remarque que le crochet 31 tirant la boucle 12 est à l'intérieur du tube 33, qui est lui-même dans le prolongement de l'alésage 2 affleurant, tel qu'illustré à la figure 7, voire positionné légèrement intérieur tel qu'illustré à la figure 10, du côté opposé à celui de l'insertion : la boucle 12 alors logée dans le tube 33.

La rétractation du préhenseur (crochet) dans le tube permet de contraindre la boucle au sein du tube, et ainsi avantageusement d'éviter des frottements (ou contraintes) lorsque l'outil d'insertion tire cette boucle sur la longueur de l'alésage traversant.

Le procédé peut encore présenter une étape e) de coupe successivement à l'étape d) d'insertion, dans laquelle on sectionne la boucle 12 de l'élément de renfort 1 dans la position finale Pf de l'élément de renfort 1. Lors de la coupe on peut diviser l'élément de renfort en deux sections de longueur 15, 16, s'étendant chacun au travers de l'alésage, et dépassant chacune des deux côtés du panneau par leur extrémités 150,151 ;160,161 ; et tel qu'illustré à la figure 8. Alternativement à l'issue de la coupe les deux sections de longueur peuvent être prévue arasantes par leur extrémités 150, 151, 160, 161 des deux côtés du panneau, tel qu'illustré à la figure 11. Encore et selon un mode de réalisation non illustré les deux sections de longueur peuvent être prévues arasantes d'un côté du panneau, et saillantes de l'autre.

Selon un mode de réalisation, l'étape e) de coupe peut être mise en œuvre par ledit outil d'insertion 3 qui comprend une lame 32 montée sur l'outil d'insertion mobile par rapport au crochet 31 : on sectionne la boucle 12 lors de l'étape e) par l'intermédiaire d'un mécanisme d'actionnement configuré pour passer ladite lame 32 d'une position escamotée à distance du crochet 31, vers une position de coupe dans laquelle ladite lame 32 sectionne la boucle 12 de élément de renfort 11 en appui sur le crochet 31, avec effet de cisaillement entre la lame 32 et le crochet 31, le cas échéant la boucle 12 maintenue au sein de l'éventuel tube 33.

Une telle étape e) de coupe, lorsque effectuée par la lame de coupe 32 montée sur l'outil d'insertion 3, embarquée à ce dernier permet avantageusement de :

- diviser l'élément de renfort 1, en deux, avantageusement sans chute de matière.
- éventuellement, de couper la boucle 12 alors positionnée légèrement intérieur au panneau du côté opposé au côté d'insertion Ci et de sorte que les extrémités 151, 161 ainsi coupées des deux sections de longueur 15, 16, soient arasantes du côté opposé à celui d'insertion, et comme illustré aux figures 10 et 11.

Au final on obtient la présence d'un renfort traversant au sein de l'alésage par exemple constitué par un ensemble de fils de nombre égal au double du nombre de fils de l'élément de renfort de longueur L, de dimension L/2 sensiblement égale à la moitié de la longueur L de l'élément de renfort 1.

Selon un autre mode de réalisation alternatif, illustré à titre d'exemple à la figure 12, l'étape e) peut être mise en œuvre alors que la boucle 12 est positionnée saillante du panneau du côté du panneau opposé au côté d'insertion Ci dans la position finale Pf de l'élément de renfort 1, par un outil de coupe 6 distinct de l'outil d'insertion 3.

Cet outil de coupe vient sectionner la boucle 12 selon un plan de coupe intermédiaire entre le crochet 31 de l'outil d'insertion 3 et la paroi extérieure du panneau ; cette coupe générant une chute 120 illustrée en pointillés à la figure 12 formée par le repli de la boucle 12 ainsi sectionnée : Cet outil de coupe peut être un cutteur électrique, une lame rotative, des ciseaux mécaniques (par exemple pneumatiques), un massicot électrique (ou pneumatique), ou encore un outil de coupe à ultrasons.

Au final on obtient la présence d'un renfort traversant au sein de l'alésage par exemple constitué par un ensemble de fils de nombre égal au double du nombre de fils de l'élément de renfort de longueur L, de dimension légèrement inférieure à la dimension L/2 sensiblement égale à la moitié de la longueur L de l'élément de renfort 1, en raison de la chute 120.

Comme illustré à la figure 12, le plan de coupe de l'outil 6 peut être sensiblement affleurant à la paroi du panneau du côté opposé au côté d'insertion Ci, afin d'obtenir deux sections de longueurs 15, 16 traversant l'alésage avec des extrémités 151, 161 arasantes de ce côté et comme illustré à la figure 11. Alternativement, le plan de coupe de l'outil 5 peut être écarté de la paroi extérieure du côté opposé au côté d'insertion Ci, afin d'obtenir deux sections de longueurs 15, 16 avec des extrémités 151, 161 saillantes de ce côté et comme illustré à la figure 7.

Selon une alternative à l'outil d'insertion avec crochet, illustré à titre d'exemple des figures 13 à 18, l'étape d) d'insertion est effectuée par la mise en œuvre d'un outil d'insertion 3 qui comprend une tige 30 configurée pour traverser l'alésage 2 du panneau depuis le côté opposé au côté d'insertion Ci et en direction du côté d'insertion Ci, ladite tige 30 étant pourvue d'une pince commandée 34, à son extrémité distale.

Cette pince commandée 34 est saillante du côté d'insertion Ci lorsque la pince commandée 34 assure la saisie de l'élément de renfort à l'étape c), la pince commandée 34 comprenant deux mors 340, 341 configurés pour passer d'une position d'ouverture Po autorisant le positionnement de l'élément de renfort 1 entre les deux mors 340, 341 jusqu'à une position de fermeture Pfe dans laquelle les deux mors 340, 341 se referment sur l'élément de renfort 1 en l'agrippant, l'étape d) d'insertion assurant la formation de la boucle 12 autour de la pince commandée 34 lorsque la pince est entraînée suivant l'axe de l'alésage 2, à partir du côté d'insertion Ci vers le côté du panneau opposé à celui de l'insertion.

Avantageusement, l'outil d'insertion 3 comprend la tige 30 et la pince commandée 34, mais encore un tube 33, l'ensemble tige 30 et pince commandée 34 étant monté coulissant dans le tube 33.

Ladite pince commandée 34 est prévue saillante de l'embouchure du tube 33 lors de la saisie de l'élément de renfort à l'étape c), et dans lequel on rétracte la pince commandée 34 au sein du tube 33, lorsque la pince commandée 34 est entraînée suivant l'axe de l'alésage, à partir du côté d'insertion vers le côté du panneau opposé à celui de l'insertion lors de l'étape d) d'insertion.

La rétraction du préhenseur (la pince commandée) dans le tube permet de contraindre la boucle 12 au sein du tube 33, et ainsi avantageusement d'éviter des frottements (ou contraintes) lorsque l'outil d'insertion tire cette boucle sur la longueur de l'alésage traversant.

Selon une caractéristique avantageuse de réalisation, les deux mors 340, 341 de la pince commandées 34 sont formés par des éléments élastiquement déformables qui, lorsque saillants de l'embouchure du tube 33, contraignent les mors 340,341, grâce à l'élasticité des éléments élastiquement déformables, dans la position d'ouverture Po où les mors 340, 341 s'étendent radialement au-delà du rayon intérieur du tube 33.

L'outil d'insertion est configuré de sorte que le passage des mors 340, 341 de la position d'ouverture Po jusqu'à la position de fermeture Pfe est provoqué lors de la rétraction de la pince 34 au sein du tube 33 au cours de laquelle les deux mors 340, 341 sont contraints par le tube 33 à se refermer l'un sur l'autre lors du coulissement de la tige 30 au sein du tube 33. Cette réalisation est astucieuse en ce qu'un unique actionneur permet, en tirant sur la tige, de rétracter la pince commandée au sein du tube, mais encore de provoquer la fermeture des mors, ou encore en poussant sur la tige de déployer la pince commandée en saillie de l'embouchure du tube, mais encore de provoquer l'ouverture des mors

Selon un mode de réalisation lequel l'étape e) de coupe est mise en œuvre par ledit outil d'insertion 3 qui comprend une lame 32 montée dans le tube 33, mobile par rapport la pince commandée 34 : on sectionne la boucle 12 lors de l'étape e) par l'intermédiaire d'un mécanisme d'actionnement configuré pour passer ladite lame 32 d'une position escamotée à distance de la pince commandée 34 au sein du tube 33 dans la position de fermeture Pfe des mors 340, 341, jusqu'à une position de coupe dans laquelle ladite lame 32 sectionne la boucle 12 de l'élément de renfort 1 en prise avec la pince 34 commandée au sein du tube 33, avec effet de cisaillement entre la lame 32 et la pince 34.

Selon une configuration maximisant le cisaillement, la lame 32 est agencée coulissante; avantageusement en une position intermédiaire entre les deux mors 340, 341, configurée pour venir sectionner la boucle de l'élément de renfort 1 selon un plan de coupe intercalé entre les deux mors 340, 341 de la pince 34 alors en position de fermeture Pfe. On limite le risque de fausse coupe, en particulier pour des renforts de forte section.

Alternativement, l'étape e) est mise en œuvre alors que la boucle 12 est positionnée saillante du panneau du côté du panneau opposé au côté d'insertion Ci dans la position finale Pf de l'élément de renfort, par un outil de coupe 6 distinct de l'outil d'insertion 3 venant sectionner la boucle 12 selon un plan de coupe intermédiaire entre le préhenseur, d'une part, consistant en la pince 34 commandée de l'outil d'insertion, et la paroi du panneau, d'autre part, la coupe générant une chute (formée par le repli de boucle 12.

De manière générale, on prévoit des moyens robotisés et/ou automatisés de manière à permettre :

- différents positionnements dudit outil d'insertion 3 par rapport au panneau P,
- différentes inclinaisons $\alpha$ dudit outil d'insertion par rapport au panneau P et de telle sorte à permettre l'insertion d'une pluralité d'éléments de renfort selon une distribution spatiale des points d'insertion paramétrable et selon des inclinaisons réglables.

Au sujet de l'inclinaison, il est bien entendu, qu'il peut s'agir d'une double inclinaison, à savoir une première inclinaison α, selon un premier axe de rotation suivant une première direction parallèle au plan moyen ou à la surface moyenne du panneau, et une deuxième inclinaison selon un deuxième axe de rotation suivant une deuxième direction parallèle au plan moyen ou à la surface moyenne du panneau et perpendiculaire à la première direction.

A cet effet le procédé peut être mis en œuvre dans une installation qui comprend un support de panneau P, les moyens robotisés comprenant, disposés de part et d'autre du support de panneau :

- un premier bras robotisé R1, notamment un bras robotisé six axes, manipulant l'outil d'insertion 3, et
- un deuxième bras robotisé R2, notamment un bras robotisé six axes manipulant les deux pinces 50, 51 du mécanisme de maintien 5. L'étape préalable de forage de l'alésage peut être mise en œuvre par un troisième bras robotisé manipulant l'outil de forage 4, ou encore par l'un des deux bras robotisés, premier bras robotisé R1 ou deuxième bras robotisé R2, en procédant à un changement d'outil.

L'invention trouvera encore une application particulière pour la mise en œuvre d'un procédé de fabrication de panneau composite mettant en œuvre le procédé de renforcement de panneau P conforme à l'invention afin de réaliser des insertions d'éléments de renfort 1 dans un panneau P, chaque élément de renfort 1 pouvant être saillant des deux côtés du panneau, comme par exemple illustré à la figure 8, une fois la boucle 12 sectionnée, ou encore arasant des deux côtés du panneau comme illustré à la figure 11, une fois la boucle sectionnée, ou encore saillant d'un côté du panneau (coté d'insertion Ci ou côté opposé) et arasant de l'autre côté du panneau (côté opposé ou côté d'insertion Ci) selon un mode de réalisation non illustré.

Ainsi et dans la position finale Pf de l'élément de renfort 1, l'élément de renfort peut être divisé en deux sections de longueur 15, 16, s'étendant chacun au travers de l'alésage et dépassant chacune des deux côtés du panneau par leurs extrémités 150,151 ; 160,161 ; et tel qu'illustré à la figure 8, ou encore arasantes des deux côtés du panneau selon la figure 11 ou encore saillante d'un côté du panneau (coté d'insertion Ci ou côté opposé) et arasante de l'autre côté du panneau (côté opposé ou côté d'insertion Ci) selon un mode de réalisation non illustré..

Selon le procédé de fabrication de panneau composite, on ajoute deux peaux 17, 18, contre les deux côtés du panneau P, la face interne de chaque peau tournée vers le panneau P en contact avec les parties saillante(s)/arasante(s) des éléments de renfort 1, et comme illustré à la figure 9. Les peaux peuvent être textiles.

Selon une première possibilité de transformation, (techniques de *« moulage par infusion sous vide »,* ou plus simplement « *infusion* ») on injecte ensuite une résine sous vide venant imprégner les peaux 17, 18 et les éléments de renforts 1 au sein du panneau, avec création de ponts de renfort au travers des alésages des panneaux, chaque pont de renfort comprenant un élément de renfort 1 imprégné de résine, le panneau composite étant obtenu, après polymérisation de la résine, avec deux peaux 17, 18 liées respectivement aux deux côtés du panneau, par leur face interne, et la présence de ponts de renfort sous forme de l'élément de renfort 1 imprégné de résine joignant les peaux 17, 18 entre elles.

Selon une seconde possibilité de transformation, les éléments de renfort et les deux peaux comprennent des fibres de renforts, et des fibres thermoplastiques et dans laquelle on chauffe l'ensemble peaux et panneau renforcé par les éléments de renfort, jusqu'à obtenir la fusion des fibres thermoplastiques, le panneau composite étant obtenu, après solidification par refroidissement du polymère thermoplastique, avec deux peaux liées par leur face interne respectivement aux deux côtés du panneau, et la présence de ponts de renfort sous forme des fibres de renforts des éléments de renfort imprégnées de polymère thermoplastique joignant les deux peaux entre elles.

Il est encore connu une technique de « *moulage par transfert de résine* » ou RTM (pour *« Resin Transfert Molding »* en anglais) pour laquelle la résine est injectée sous haute pression (3 à 10 bars) jusqu'à saturer la préforme dans un moule fermé (comprenant un moule et un contre-moule), avec utilisation d'une presse pour maintenir l'ensemble moule et contre moule fermé.

On distingue encore la technique « moulage par transfert de résine dite économique » ou RTM Light qui combine à la fois l'injection de la résine sous une pression supérieure à la pression atmosphérique, mais toutefois inférieure ou égale à 3 bars dans le moule, et la mise sous vide du moule avant injection de la résine, typiquement de 0,2 à 0,3 bars en dessous de la pression atmosphérique, et qui présente l'avantage d'être moins coûteuse en termes d'équipement que le procédé classique RTM fonctionnement à plus haute pression d'injection. Notamment le contre-moule peut être semi-rigide, sous forme d'une membrane épaisse, et non nécessairement rigide comme pour une RTM classique.

La RTM Light trouve une application particulière pour la transformation de panneau de mousse de faibles densités telle que des mousses polyéthylène de 35 kg/m$^3$ à 50 kg/m$^3$ et dont la structure des cellules, peu résistante à la compression, ne permet pas une transformation par la technique d'infusion en raison du vide trop poussé.

Ainsi, et selon cette troisième technique possible de transformation, on injecte sous une pression supérieure à la pression atmosphérique une résine au niveau de points d'injection dans un moule, la pression d'injection inférieure ou égale 3 bars, le moule maintenu sous vide entre 0,2 et 0,3 bar en dessous de la pression atmosphérique, la résine venant imprégner les peaux 17, 18 et les éléments de renforts 1 au sein du panneau, avec création de ponts de renfort au travers des alésages des panneaux, chaque pont de renfort comprenant un élément de renfort 1 imprégné de résine, le panneau composite étant obtenu, après polymérisation de la résine, avec deux peaux 17, 18 liées respectivement aux deux côtés du panneau, par leur face interne, et la présence de ponts de renfort sous forme de l'élément de renfort 1 imprégné de résine joignant les peaux 17, 18 entre elles.

**Avantages**

Le procédé de renforcement est notable et avantageux en ce qu'il permet d'obtenir des ponts de renfort entre peaux, avec des taux de fibres de renfort supérieurs à 30%, voire 40% en volume notamment compris entre 40% et 89%, en volume voire entre 45% et 89% en volume, voire entre 40% et 80%, voire entre 45% et 75%, voire entre 45% et 70% en volume à savoir une quantité importante de fibres par rapport à la résine polymérisée des ponts de renfort.

L'utilisation d'un outil de forage comprenant un corps cylindrique pourvu à sa base d'une arête circulaire de coupe présente pour intérêt qu'il permet d'assurer :

- la création d'un alésage (ou trou) de géométrie cylindrique, par enlèvement de matière, générant une carotte interne au corps cylindrique, en minimisant les phénomènes de compression du matériau du panneau et donc les tensions internes au niveau des alésages percés,
- la formation de tels alésages avec minimisation des tensions internes, sans limitation sur le diamètre de l'alésage qui peuvent être de diamètre bien supérieur à ceux créés par le travail d'une aiguille, par exemple de diamètre supérieur ou égal à 2,5 mm, voire supérieur ou égal à 3 mm, voire supérieur à 4 mm, voire même supérieur à 6 mm, ou encore supérieure égale à 8 mm, voire supérieure ou égale à 10 mm, et/ou encore sans limitation sur l'épaisseur E du panneau qui peut être comprise entre 30 mm et 300 mm, en particulier comprise entre 50 mm et 200 mm,
- d'assurer la création d'alésage de trajectoire rectiligne maîtrisée, en minimisant les tensions internes, même si le matériau du panneau est un multicouche, y compris différentes couches superposées de différents matériaux et/de différentes densités, ou encore même si le panneau comprend des feuilles de parement, par exemple métalliques, et même si l'angle de forage n'est pas, localement au point de forage, perpendiculaire avec la surface du panneau à percer, ou encore localement perpendiculaire aux surfaces intermédiaires des différentes couches du panneau.

Garantir un alésage de géomètre cylindrique maitrisé, en minimisant les tensions internes, permet ensuite d'insérer l'élément de renfort, en particulier fibreux, selon l'étape d) avec un garnissage maitrisé en particulier une section de l'élément de renfort maitrisée, mais sans excès de sorte à ne pas perdre la géométrie cylindrique donnant la forme finale des ponts de renfort lors de l'application de la résine.

Au final le procédé de fabrication de panneau composite permet l'obtention de panneau composite comprenant deux peaux liées par leur face interne respectivement aux deux côtés du panneau P, et la présence de ponts de renfort sous forme des fibres de renfort des éléments de renfort imprégnées de résine joignant les deux peaux entre elles ; ledit panneau composite présentant les caractéristiques suivantes :

- une épaisseur E du panneau (hors peaux) comprise entre 30 mm et 300 mm, en particulier comprise entre 50 mm et 200 mm,
- des ponts de renfort, cylindriques de diamètre compris entre 2,5 mm et 12,5 mm, par exemple entre 4 mm et 12,5 mm,
- un taux de fibre de renfort dans les ponts de renfort compris entre 30% et 80% en volume, en particulier entre 45% et 70%.

En particulier, ledit panneau (hors peau) peut être un multicouches de différentes densités et/ou de différents matériaux et/ou présentant des feuilles de parement métalliques. Par1, Par2.

Avantageusement, la possibilité de prévoir des ponts de renfort de diamètre conséquent, par exemple supérieur à 3 mm, voire à 5 mm, 7 mm, 8mm ou encore 9 mm permet de diminuer la densité surface du nombre de ponts de renforts, mais encore de prévoir de tels renforts dans des panneaux d'épaisseur importante.

**Exemples**

Trois exemples de panneaux composites sont détaillés ci-après avec trois matériaux différents pour le panneau.

Ces trois exemples présentent toutefois les caractéristiques communes suivantes :

- Ils sont obtenus par la technique de moulage par infusion sous vide, avec un vide de l'ordre de 0.9 bar en dessous de la pression atmosphérique et l'utilisation d'une résine époxy,
- Les deux peaux sont composées d'une nappe de verre roving cousus bidirectionnelle 0/90°.,
- le matériau d'âme - le panneau- est dans une mousse à cellules fermés d'épaisseur E égale à 50 mm,
- les fils des éléments de renfort sont en fibres de verre, chaque fil présente un titrage de 300 Tex.

**Exemple 1** Matériau d'âme acrylique (PMI) renforcé par le procédé présenté suivant différents diamètres de carottage et dont les alésages ont été garnis suivant différents taux de remplissage.

[Tableau 2]

| Ø Ext (mm) | N° Ligne | Nb de fils | Pont de renfort n°1 | | Pont de renfort n°2 | | | Diamètre | | Taux de fibre | | Moy (%Vf) |
|---|---|---|---|---|---|---|---|---|---|---|---|---|
| | | | Ø (mm) | Taux de fibre (%m) | Ø (mm) | Taux de fibre (%m) | | Moy (mm) | Écart type | Moy (%m) | Écart type | |
| 4 | 1 | 40 | 4 | 63,8 | 4,03 | 66,5 | | 4,02 | 0,02 | 65,1 | 1,9 | 45,8 |
| | 2 | 48 | 4,02 | 70,6 | 4,01 | 72,5 | | 4,02 | 0,01 | 71,6 | 1,3 | 53,2 |
| | 3 | 56 | 4,12 | 73,5 | 3,97 | 77,3 | | 4,05 | 0,11 | 75,4 | 2,6 | 58,1 |
| 6 | 4 | 100 | 6,02 | 68,9 | 5,86 | 72,2 | | 5,94 | 0,11 | 70,5 | 2,3 | 52 |
| | 5 | 120 | 6,06 | 74,9 | 5,85 | 77,5 | | 5,96 | 0,15 | 76,2 | 1,8 | 59,1 |
| | 6 | 130 | 6,16 | 76,3 | 5,86 | 80,0 | | 6,01 | 0,21 | 78,1 | 2,6 | 61,8 |
| 10 | 7 | 280 | 10,01 | 71,3 | 9,93 | 73,4 | | 9,97 | 0,06 | 72,4 | 1,5 | 54,2 |
| | 8 | 320 | 10,1 | 75,2 | 10,05 | 76,7 | | 10,08 | 0,04 | 75,9 | 1,1 | 58,8 |
| | 9 | 360 | 10,06 | 78 | 9,98 | 79,4 | | 10,02 | 0,06 | 78,7 | 1 | 62,5 |

Différents essais sont conduits sur un même panneau en mousse acrylique de 50 mm d'épaisseur qui est renforcé suivant neuf lignes de renfort, et comme présenté au tableau 2 et, selon un protocole décrit ci-après :

Le panneau est plan et les axes de forage des alésages et les axes d'insertion des éléments de renfort sont perpendiculaires au plan du panneau.

Chaque ligne N°1 à N°9 du tableau 2 prévoit l'insertion de deux éléments de renfort (par ligne), selon le procédé de renforcement selon la présente divulgation. La boucle formée à l'issue de l'étape d'insertion d) est coupée divisant l'élément de renfort en deux sections de longueur, dépassant du panneau sur ces deux faces

A chaque ligne (N°1 à N°9), le couple de paramètres diamètre extérieur (Ø Ext) de l'outil de forage/ nombre de fils varie. Il est à noter que le nombre de fils mentionné dans le tableau est ici double du nombre de fils de l'élément de renfort lorsqu'il est positionné à l'étape b), soit le nombre de fils dans l'alésage après le repliement de l'élément de renfort dans l'alésage foré dans le panneau à l'issue de l'étape d).

Deux peaux composées d'une nappe de verre rovings cousus, bidirectionnelle 0/90° sont ajoutées contre les deux faces du panneau renforcé, puis l'ensemble panneau renforcé/peaux est soumis à une transformation selon le procédé d'obtention d'un panneau composite mettant en œuvre la technique de moulage par infusion sous vide. Le vide est un vide de 0,9 bar en dessous de la pression atmosphérique et qui permet la migration la résine époxy venant imprégner les peaux, mais encore les fils de renfort au sein des alésages forés. Les mesures des ponts de renforts sont effectuées après polymérisation de la résine époxy.

Pour chaque ligne N°1 à N°9, on obtient deux ponts de renfort (« *Pont de renfort N°1* » et « *Pont de renfort N°2* ») sous forme de fils imprégnés de résine de section globalement cylindrique.

La mesure du diamètre des ponts de renfort (pont de renfort N°1 et pont de renfort N°2) est obtenue à l'aide d'un pied à coulisse, après avoir dégarni la mousse acrylique du panneau autour des ponts de renfort faisant l'objet de la mesure.

Le taux de fibre dans le pont de renfort (%m), est déterminé essentiellement selon la méthode de calcination divulgué par la NF EN ISO 1172 - Détermination des taux de verre textile et de charge minérale - Méthodes par calcination. » ci-après présentée.

Le tableau de la figure 2 présente ainsi les taux de fibre (en % massique).

La conversion du taux de fibres massique (%m) contenu dans le pont de renfort vers un taux de fibres volumique ($V_{fibre}$) peut être facilement obtenue par la formule suivante

[Math. 1]

$$V_{fibre} = \frac{1}{1 + \dfrac{\rho_{fibres}}{\rho_{resine}} \times \dfrac{1 - \%m/100}{\%m/100}} \times 100$$

Avec $\rho_{fibres}$ ici égale à 2500 kg/m$^3$ et $\rho_{resine}$ égale à 1130 kg/m$^3$.

**Exemple 2** Matériau d'âme polyuréthane (PUR) renforcé par le procédé présenté suivant différents diamètres de carottage et dont les alésages ont été garnis suivant différents taux de remplissage.

[Tableau 3]

| Ø Ext (mm) | N° Ligne | Nb de fils | Pont de renfort n°1 | | Pont de renfort n°2 | | | Diamètre | | Taux de fibre | | |
|---|---|---|---|---|---|---|---|---|---|---|---|---|
| | | | Ø (mm) | Taux de fibre (%m) | Ø (mm) | Taux de fibre (%m) | | Moy (mm) | Écart type | Moy (%m) | Écart type | Moy (% Vf ) |
| 4 | 1 | 36 | 3,19 | 74,2 | 3,21 | 74,5 | | 3,2 | 0,01 | 74,3 | 0,2 | 56,7 |
| | 2 | 44 | 3,23 | 79,2 | 3,27 | 78,8 | | 3,25 | 0,03 | 79, | 0,3 | 63,0 |
| | 3 | 28 | 3,12 | 69,2 | 3,12 | 73,2 | | 3,12 | 0 | 71,2 | 2,8 | 52,8 |
| 6 | 4 | 60 | 4,92 | 69,9 | 4,93 | 73,8 | | 4,93 | 0,01 | 71,9 | 2,8 | 53,6 |
| | 5 | 70 | 4,92 | 75,5 | 4,92 | 71,8 | | 4,92 | 0 | 73,7 | 2,6 | 55,9 |
| | 6 | 80 | 5 | 76,1 | 5,03 | 74,5 | | 5,02 | 0,02 | 75,3 | 1,1 | 58,0 |
| 10 | 7 | 220 | 8,59 | 74,8 | 8,87 | 75,9 | | 8,73 | 0,2 | 75,4 | 0,8 | 58,1 |
| | 8 | 260 | 9,02 | 77,0 | 8,91 | 76,8 | | 8,97 | 0,08 | 76,9 | 0,1 | 60,1 |
| | 9 | 270 | 9,04 | 75,9 | *9,03 | 76,0 | | 9,04 | 0,01 | 75,9 | 0,1 | 58,8 |

Le tableau 3 présente les résultats lorsque le panneau est une mousse de polyuréthane à cellules fermées, et selon le même protocole que dans l'exemple 1

La conversion du taux de fibres massique (%m) contenu dans le pont de renfort vers un taux de fibres volumique ($V_{fibre}$) peut être facilement obtenue par la formule de l'exemple 1 avec les mêmes valeurs de densités volumique $\rho_{fibres}$ et $\rho_{resine}$.

**Exemple 3** Matériau d'âme polyéthylène (PE) renforcé par le procédé présenté suivant différents diamètres de carottage et dont les alésages ont été garnis suivant différents taux de remplissage.

[Tableau 4]

| Ø Ext (mm) | N° Ligne | Nb de fils | Pont de renfort n °1 | | Pont de renfort n °2 | | | Diamètre | | Taux de fibre | | |
|---|---|---|---|---|---|---|---|---|---|---|---|---|
| | | | Ø (mm) | Taux de fibre (%m) | Ø (mm) | Taux de fibre (%m) | | Moy (mm) | Écart type | Moy (%m) | Écart type | Moy (% Vf) |
| 4 | 1 | 20 | 2,47 | 74,5 | 2,51 | 72,9 | | 2,49 | 0,03 | 73,7 | 1,1 | 55,9 |
| | 2 | 28 | 2,96 | 75,6 | 2,81 | 76,7 | | 2,89 | 0,11 | 76,1 | 0,7 | 59,1 |
| | 3 | 40 | 3,07 | 80,5 | 3,15 | 81,2 | | 3,11 | 0,06 | 80,9 | 0,5 | 65,6 |
| | | | | | | | | | | | | |
| 6 | 4 | 70 | 4,52 | 74,5 | 4,78 | 71,5 | | 4,65 | 0,18 | 73, | 2,1 | 55,0 |
| | 5 | 100 | 5,18 | 70,4 | 5,12 | 78,3 | | 5,15 | 0,04 | 74,4 | 5,6 | 56,7 |
| | 6 | 120 | 5,27 | 82,7 | 5,31 | 82,3 | | 5,29 | 0,03 | 82,5 | 0,3 | 68 |
| | | | | | | | | | | | | |
| 10 | 7 | 220 | 8,45 | 72,2 | 8,41 | 74,2 | | 8,43 | 0,03 | 73,2 | 1,4 | 55,2 |
| | 8 | 240 | 8,5 | 78,1 | 8,47 | 76,6 | | 8,49 | 0,02 | 77,4 | 1,1 | 60,7 |
| | 9 | 260 | 8,57 | 77,5 | 8,55 | 78,2 | | 8,56 | 0,01 | 77,8 | 0,5 | 61,4 |

Le tableau 4 présente les résultats lorsque le panneau est une mousse de polyéthylène à cellules fermées, et selon le même protocole que dans l'exemple 1

. La conversion du taux de fibres massique (%m) contenu dans le pont de renfort vers un taux de fibres volumique ($V_{fibre}$) peut être facilement obtenue par la formule de l'exemple 1 avec les mêmes valeurs de densités volumique $\rho_{fibres}$ et $\rho_{resine}$.

**Mesures**

En ce qui concerne les renforts à base de fibres de verre, la méthode de détermination des taux de fibres contenues dans les renforts est la méthode de calcination présentée dans la norme NF EN ISO 1172 - Détermination des taux de verre textile et de charge minérale - Méthodes par calcination. Cette méthode a été utilisée pour déterminé %m dans les exemples 1 à 3.

Le principe de la méthode repose sur une différence de masse entre la masse du renfort composite complet (fibres de verre + matrice thermodurcissable ou thermoplastique) et la masse de fibres de verre de ce même échantillon dont la matrice a été retirée par calcination.

Le creuset ou autre récipient qui va accueillir le renfort composite est soumis à la température choisie pour la calcination pendant une durée de 10 minutes puis une fois refroidi à température ambiante sa masse est mesurée. L'opération est renouvelée jusqu'à obtention d'une masse constante pour le creuset.

Le renfort composite est placé dans le creuset précédemment préparé et l'ensemble est séché à 105 °C jusqu'à obtention d'une masse constante. La masse de l'ensemble (creuset + renfort composite) est mesurée une fois l'échantillon revenu à température ambiante.

L'ensemble est ensuite placé dans un four ayant une température de 625°C ou encore comprise entre 500°C et 600 °C pour des matériaux (fibres ou charges) ne supportant pas la première consigne de température dans le but de calciner le renfort composite et de ne récupérer que les fibres de renfort présentes. L'échantillon est conservé dans le fout jusqu'à obtention d'une masse constante.

Comme prévu dans la norme, lorsque les matériaux sont soumis à l'essai régulièrement, il est permis de définir un temps minimal de calcination et de séchage pour être certain que la masse constante est obtenue. Dans le cas de nos essais, la température du four est de 625°C pour une durée de 3 heures.

La masse de l'ensemble (creuset + fibres restantes) est mesurée une fois à température ambiante.

Le taux de fibres de verre en % de masse (%m) initiale est calculé directement par la formule suivante :

[Math 2]

$$\%m = \frac{m_3 - m_1}{m_2 - m_1} \, x \, 100$$

Avec :

- $m_1$ est la masse initiale, en gramme, du creuset
- $m_2$ est la masse initiale totale, en grammes, de l'ensemble creuset séché et renfort séché avant calcination,
- $m_3$ est la masse finale totale, en grammes, du creuset et du résidu après calcination.

La norme précise également qu'un échantillon doit peser entre 2 et 10g concernant les stratifiés composites, ce qui est n'est pas toujours possible pour des ponts de renforts de diamètre faible pour les exemples 1 à 3. Aussi, et dans les exemples 1 à 3, les mesures sont à réaliser sur un minimum de 2 échantillons (les plus identiques possibles « pont de renfort N°1 et « Pont de renfort N°2 »). Le résultat est une moyenne des deux essais à condition que la différence entre les deux mesures est inférieure à 5%. Le cas échéant une troisième mesure est réalisée sur un 3ième échantillon le plus semblable aux deux premiers et la moyenne des 3 mesures est conservée.

Concernant les renforts réalisés à base de fibres de carbone ou autres fibres de renforts ne supportant pas la calcination (dégradation des fibres liée à l'exposition à la température), une méthode autre par dissolution de la matrice et décantation doit être utilisée telle que présentée dans la norme NF EN ISO 11667 - Détermination des taux de résine, de fibre de renfort et de charge minérale - Méthodes par dissolution

La conversion du taux de fibres massique contenu dans les renforts vers un taux de fibres volumique fait intervenir les masses volumiques de la matrice, des fibres de renfort et éventuellement du composite (fibre + matrice).

Les masses volumiques des composants sont soit fournies par le fournisseur de la matière première ou sont déterminées par le moyen de mesure le plus adéquat pour quantifier le volume de l'élément (Pesée avec immersion dans un solvant, détermination du volume par utilisation d'un pycnomètre ou pycnomètre à gaz (pycnomètre à hélium). La masse de l'élément pouvant être obtenue par pesée par ailleurs.

Les relations entre les fractions massiques et volumiques de chacun des constituants du matériau composite sont connues de l'homme du métier et conduisent à l'expression de la fraction volumique de fibres dans le renfort en % par la formule [Math 1] donnée à l'exemple 1.

**Liste des signes de référence** :

- 1: Elément de renfort,
- 15, 16. Sections de longueur
- 150,151. Extrémités longitudinales section de longueur 15
- 160,161. Extrémités longitudinales section de longueur 16
- 2. Alésage,
- 3. Outil d'insertion,
- 30. Tige,
- 31. Crochet,
- 32. Lame,
- 33. Tube,
- 34. Pince commandée,
- 340, 341. Mors,
- 4. Outil de forage,
- 40. Corps cylindrique,
- 41. Arête circulaire de coupe,
- 5. Mécanisme de maintien,
- 50,51. Pinces,
- 6. Outil de coupe (Figure 12),
- 17, 18. Peaux,
- P. Panneau,
- C1, C2, C3. Couches,
- Par. Feuilles de parement,

EP 4 238 745 B1

- Ca. Carotte,
- Po. Position d'ouverture (pince),
- Pf. Position finale
- Pfe. Position de fermeture (pince)
- E. Epaisseur
- 10,11. Extrémités longitudinales
- L. Longueur
- -Ci. Côté d'insertion
  12. Boucle
- 13. Fils
- 120. Chute
- R1. Premier bras robotisé
- R2 .Deuxième bras robotisé.

**Revendications**

1. Procédé de renforcement d'un panneau (P), plan ou préformé en trois dimensions, suivant son épaisseur E :

  - une étape a) de fourniture d'un élément de renfort (1), longiligne, souple, avec deux extrémités longitudinales (10, 11) présentant une longueur L strictement supérieure ou égale au double de l'épaisseur E du panneau (P) au niveau d'un point d'insertion,
  - une étape b) de positionnement et de maintien dudit élément de renfort (1) d'un côté du panneau, dit côté d'insertion (Ci)
  - une étape c) de saisie de l'élément de renfort (1), du côté d'insertion en une position intermédiaire entre les deux extrémités longitudinales de l'élément de renfort,
  - une étape d) d'insertion dans laquelle on tire ledit élément de renfort saisi en la position intermédiaire, au travers d'un alésage (2) traversant le panneau, en repliant l'élément de renfort sur lui-même, et jusqu'à une position finale (Pf) dans laquelle les deux extrémités longitudinales (10, 11) dépassent de l'alésage (2) du côté de l'insertion (Ci) ou encore sont arasantes de la paroi du panneau du côté de l'insertion, une boucle (12) de l'élément de renfort dépassant de l'alésage (2) du côté du panneau opposé au côté d'insertion (Ci), ou encore étant prévue dans une position à proximité de la paroi extérieure du panneau du côté du panneau opposé au côté d'insertion configurée de sorte qu'une coupe de la boucle (12) divise l'élément de renfort en deux sections de longueur (15,16) s'étendant chacune au travers de l'alésage, en positionnant les extrémités (151, 161) des deux sections de longueur (15,16) arasantes à la paroi extérieure du panneau du côté opposé au côté d'insertion (Ci), et dans lequel le procédé de renforcement présente une étape de formation de l'alésage, préalablement à l'étape d) d'insertion, dans laquelle on fore dans le panneau (P) ledit alésage (2) par l'intermédiaire d'un outil de forage (4) comprenant un corps cylindrique (40) pourvu à sa base d'une arête circulaire de coupe (41), et dans laquelle on forme l'alésage par un mouvement combinant une avance suivant l'axe du corps cylindrique (40) et une rotation autour de l'axe du corps cylindrique (40), générant une carotte issue du forage de l'alésage, interne au corps cylindrique, et dans lequel ladite étape b) de positionnement et de maintien est mise en œuvre par l'intermédiaire d'un mécanisme de maintien (5) comprenant deux pinces (50, 51), configurées pour maintenir ledit élément de renfort (1) en deux positions, de part et d'autre, du milieu de l'élément de renfort (1) suivant sa longueur et dans on prévoit des moyens robotisés et/ ou automatisés de manière à assurer :

    - différents positionnements dudit outil d'insertion (3) par rapport au panneau (P),
    - différentes inclinaisons ($\alpha$) dudit outil d'insertion (3) par rapport au panneau (P) et de telle sorte à assurer l'insertion d'une pluralité d'éléments de renfort selon une distribution spatiale des points d'insertion paramétrable et selon des inclinaisons réglables.

2. Procédé selon la revendication 1 dans lequel l'arête circulaire de coupe (41) est formée par un biseau extérieur.

3. Procédé de renforcement d'un panneau (P) selon l'une des revendications 1 à 2 dans lequel l'élément de renfort (1) est un ensemble de fils (13), s'étendant en longueur sur la longueur L de l'élément de renfort (1), lesdits fils étant juxtaposés, les fils de l'ensemble de fils éventuellement torsadés entre eux suivant la longueur de l'élément de renfort.

4. Procédé selon la revendication 3, dans lequel les fils sont choisis parmi les fils en fibres de verre, des fils en fibres de carbone, des fils en fibres d'aramide, des fils en fibres végétales, par exemple comme le lin, ou encore des fils en fibres polyester.

5. Procédé selon la revendication 1, dans lequel les éléments de renfort sont fibreux, et comprennent des fibres de renfort, et des fibres thermoplastiques, fusibles.

6. Procédé selon l'une des revendications 1 à 5, dans lequel on évacue la carotte issue du forage de l'alésage, interne au corps cylindrique, par la mise en pression du corps cylindrique avec un gaz.

7. Procédé selon l'une des revendications 1 à 6 dans lequel on prévoit un support de panneau (P), les moyens robotisés comprenant, disposés de part et d'autre du support de panneau :

- un premier bras robotisé (R1), manipulant l'outil d'insertion (3), et
- un deuxième bras robotisé, manipulant les deux pinces (50, 51) du mécanisme de maintien (5).

8. Procédé selon l'une des revendications 1 à 7, dans lequel le diamètre extérieur du corps cylindrique (40) de l'outil de forage est compris entre 4 mm et 14 mm et dans lequel le diamètre intérieur du corps cylindrique est compris entre 3 mm et 12,5 mm.

9. Procédé selon l'une des revendications 1 à 8, dans lequel l'épaisseur (E) du panneau P est comprise entre 30 mm et 300 mm.

10. Procédé selon l'une des revendications 1 à 9, dans lequel l'âme du panneau composite est mono-matériau, consistant en un panneau de mousse cellulaire tel que des mousses polyéthylène (PE), des mousses polyéthylène téréphtalate (PET), des mousses polyuréthanes (PUR), des mousses acryliques, des mousses bio-sourcées, des mousses polyméthacrylimide (PMI) et également des matériaux divers tel que le liège par exemple.

11. Procédé selon l'une des revendications 1 à 10 dans lequel l'âme du panneau composite comprend plusieurs couches (C1, C2, C3), de nombres compris entre 2 et N, entier supérieur à 3 de différentes caractéristiques, par exemple plusieurs couches C1 à C3 en superposition de mousses plastiques, de différentes densités et/ou de différents matériaux (mousse polyéthylène ou encore une mousse de polyuréthane ; mousses polyuréthanes (PUR), des mousses acryliques, des mousses bio-sourcées.

12. Procédé de fabrication de panneau composite mettant en œuvre le procédé de renforcement de panneau (P) suivant son épaisseur selon l'une des revendications 1 à 11, pour réaliser des insertions d'éléments de renfort (1) dans un panneau (P), chaque élément de renfort (1) étant saillant des deux côtés du panneau, ou encore prévu arasant des deux côtés du panneau, ou encore saillant d'un côté du panneau et arasant de l'autre côté du panneau, et dans lequel on ajoute deux peaux (17, 18), contre les deux côtés du panneau, la face interne de chaque peau tournée vers le panneau en contact avec les parties saillante(s)/arasante(s) des éléments de renfort, puis on injecte une résine sous vide venant imprégner les peaux et les éléments de renforts au sein du panneau, avec création de ponts de renfort au travers des alésages des panneaux, chaque pont de renfort comprenant un élément de renfort imprégné de résine, le panneau composite étant obtenu, après polymérisation de la résine, avec deux peaux liées par leur face interne respectivement aux deux côtés du panneau, et la présence de ponts de renfort sous forme de l'élément de renfort imprégné de résine joignant les deux peaux entre elles,

ou procédé de fabrication de panneau composite mettant en œuvre le procédé de renforcement de panneau (P) suivant son épaisseur selon l'une des revendications 1 à 11, pour réaliser des insertions d'éléments de renfort (1) dans un panneau (P), chaque élément de renfort (1) étant saillant des deux côtés du panneau, ou encore prévu arasant des deux côtés du panneau, ou encore saillant d'un côté du panneau et arasant de l'autre côté du panneau, et dans lequel on ajoute deux peaux (17, 18), contre les deux côtés du panneau, la face interne de chaque peau tournée vers le panneau en contact avec les parties saillante(s)/arasante(s) des éléments de renfort, et dans lequel les éléments de renfort et les deux peaux comprennent des fibres de renfort, et des fibres thermoplastiques et dans lequel on chauffe l'ensemble peaux et panneau renforcé par les éléments de renfort, jusqu'à obtenir la fusion des fibres thermoplastiques, le panneau composite étant obtenu, après solidification par refroidissement du polymère thermoplastique, avec deux peaux liées par leur face interne respectivement aux deux côtés du panneau, et la présence de ponts de renfort sous forme des fibres de renfort des éléments de renfort imprégnées de polymère thermoplastique joignant les deux peaux entre elles,
ou procédé de fabrication de panneau composite mettant en œuvre le procédé de renforcement de panneau (P) suivant son épaisseur selon l'une des revendications 1 à 11, pour réaliser des insertions d'éléments de renfort (1)

dans un panneau (P), chaque élément de renfort (1) étant saillant des deux côtés du panneau, ou encore prévu arasant des deux côtés du panneau, ou encore saillant d'un côté du panneau et arasant de l'autre côté du panneau, et dans lequel on ajoute deux peaux (17, 18), contre les deux côtés du panneau, la face interne de chaque peau tournée vers le panneau en contact avec les parties saillante(s)/arasante(s) des éléments de renfort, puis on injecte sous pression supérieure à la pression atmosphérique une résine au niveau de points d'injection dans un moule, la pression d'injection inférieure ou égale à 3 bars, le moule maintenu sous vide entre 0,2 et 0,3 bar en dessous de la pression atmosphérique, la résine venant imprégner les peaux (17, 18) et les éléments de renfort (1) au sein du panneau, avec création de ponts de renfort au travers des alésages des panneaux, chaque pont de renfort comprenant un élément de renfort 1 imprégné de résine, le panneau composite étant obtenu, après polymérisation de la résine, avec deux peaux (17, 18) liées respectivement aux deux côtés du panneau, par leur face interne, et la présence de ponts de renfort sous forme de l'élément de renfort (1) imprégné de résine joignant les peaux (17, 18) entre elles.

13. Panneau composite obtenu selon le procédé de fabrication de la revendication 12 comprenant deux peaux liées par leur face interne respectivement aux deux côtés du panneau (P), et la présence de ponts de renfort sous forme des fibres de renfort des éléments de renfort imprégnées de résine joignant les deux peaux entre elles ; ledit panneau composite présentant les caractéristiques suivantes :

- une épaisseur E du panneau, hors peaux, comprise entre 30 mm et 300 mm, en particulier comprise entre 50 mm et 300 mm,
- des ponts de renfort, cylindriques de diamètre compris entre 2,5 mm et 12,5 mm,
- un taux de fibre de renfort dans les ponts de renfort compris entre 30 % et 80% en volume, notamment compris entre 45% et 89% en volume, en particulier entre 45% et 70% en volume.

14. Panneau composite selon la revendication 13 dans lequel ledit panneau est un multicouche de différentes densités et/ou de différents matériaux et/ou présentant des feuilles de parement métalliques (Par1, Par2).

**Patentansprüche**

1. Verfahren zur Verstärkung einer ebenen oder dreidimensional vorgeformten Platte (P) entlang ihrer Dicke E:

- ein Schritt a) des Bereitstellens eines länglichen, flexiblen Verstärkungselements (1) mit zwei Längsenden (10, 11), das eine Länge L aufweist, die strikt größer oder gleich dem Doppelten der Dicke E der Platte (P) auf der Höhe eines Einfügepunkts ist,
- ein Schritt b) des Positionierens und Haltens des genannten Verstärkungselements (1) auf einer Seite der Platte, der sogenannten Einfügeseite (Ci),
- ein Schritt c) des Ergreifens des Verstärkungselements (1), von der Einfügeseite in einer Zwischenposition zwischen den beiden Längsenden des Verstärkungselements,
- ein Schritt d) des Einfügens, in dem das in der Zwischenposition ergriffene Verstärkungselement durch eine Bohrung (2) durch die Platte gezogen wird, wobei das Verstärkungselement auf sich selbst zurückgefaltet wird, und bis zu einer Endposition (Pf), in der die beiden Längsenden (10, 11) auf der Einfügeseite (Ci) aus der Bohrung (2) herausragen oder auf der Einfügeseite bündig mit der Wand der Platte abschließen, wobei eine Schlaufe (12) des Verstärkungselements auf der Seite der Platte, die der Einfügeseite (Ci) gegenüberliegt, aus der Bohrung (2) herausragt, oder in einer Position in der Nähe der Außenwand der Platte auf der Seite der Platte gegenüber der Einfügeseite vorgesehen ist, die so konfiguriert ist, dass ein Schnitt der Schleife (12) das Verstärkungselement in zwei Längenabschnitte (15, 16) teilt, die sich jeweils durch die Bohrung erstrecken, wobei die Enden (151, 161) der beiden Längenabschnitte (15, 16) bündig mit der Außenwand der Platte auf der Seite gegenüber der Einfügeseite (Ci) positioniert werden,

und wobei das Verstärkungsverfahren einen Schritt des Bildens der Bohrung vor dem Schritt d) des Einfügens aufweist, wobei die Bohrung (2) mit Hilfe eines Bohrwerkzeugs (4), das einen zylindrischen Körper (40) umfasst, der an seiner Basis mit einer kreisförmigen Schneidkante (41) versehen ist, in die Platte (P) gebohrt wird, und
wobei die Bohrung durch eine Bewegung geformt wird, die einen Vorschub entlang der Achse des zylindrischen Körpers (40) und eine Drehung um die Achse des zylindrischen Körpers (40) kombiniert, wodurch ein aus dem Bohren der Bohrung stammender Bohrkern erzeugt wird, im Inneren des zylindrischen Körpers,

und wobei der Schritt b) des Positionierens und Haltens mittels eines Haltemechanismus (5) durchgeführt wird, der zwei Klemmen (50, 51) umfasst, die so konfiguriert sind, dass sie das Verstärkungselement (1) in zwei Positionen auf beiden Seiten der Mitte des Verstärkungselements (1) entlang seiner Länge halten, und wobei robotergesteuerte und/oder automatisierte Mittel vorgesehen sind, um Folgendes sicherzustellen:

- verschiedene Positionierungen des Einfügewerkzeugs (3) in Bezug auf die Platte (P), - verschiedene Neigungen ($\alpha$) des Einfügewerkzeugs (3) in Bezug auf die Platte (P) und zwar so, dass das Einfügen einer Vielzahl von Verstärkungselementen gemäß einer konfigurierbaren räumlichen Verteilung der Einfügepunkte und gemäß einstellbaren Neigungen gewährleistet ist.

2. Verfahren nach Anspruch 1, wobei die kreisförmige Schneidkante (41) durch Abkanten gebildet wird.

3. Verfahren zum Verstärken einer Platte (P) nach einem der Ansprüche 1 bis 2, wobei das Verstärkungselement (1) eine Anordnung von Drähten (13) ist, die sich in Längsrichtung über die Länge L des Verstärkungselements (1) erstrecken, wobei die Drähte aneinanderliegend angeordnet sind und die Drähte der Gruppe von Drähten gegebenenfalls entlang der Länge des Verstärkungselements miteinander verdrillt sind.

4. Verfahren nach Anspruch 3, wobei die Drähte aus Glasfaserdrähten, Kohlefaserdrähten, Aramidfaserdrähten, Pflanzenfaserdrähten, beispielsweise wie Flachs, oder auch Polyesterfaserdrähten gewählt sind.

5. Verfahren nach Anspruch 1, wobei die Verstärkungselemente faserig sind und Verstärkungsfasern sowie schmelzbare thermoplastische Fasern umfassen.

6. Verfahren nach einem der Ansprüche 1 bis 5, wobei der Bohrkern aus der Bohrung im Inneren des zylindrischen Körpers durch Druckbeaufschlagung des zylindrischen Körpers mit einem Gas entfernt wird.

7. Verfahren nach einem der Ansprüche 1 bis 6, wobei eine Halterung der Platte vorgesehen ist, und wobei Robotermittel, die beiderseits der Plattenhalterung angeordnet sind, umfassen:

- einen ersten Roboterarm (R1), der das Einfügewerkzeug (3) handhabt, und
- einen zweiten Roboterarm, der die beiden Klemmen (50, 51) des Haltevorrichtung (5) handhabt.

8. Verfahren nach einem der Ansprüche 1 bis 7, wobei der Außendurchmesser des zylindrischen Körpers (40) des Bohrwerkzeugs zwischen 4 mm und 14 mm liegt und wobei der Innendurchmesser des zylindrischen Körpers zwischen 3 mm und 12,5 mm liegt.

9. Verfahren nach einem der Ansprüche 1 bis 8, wobei die Dicke (E) der Platte P zwischen 30 mm und 300 mm liegt.

10. Verfahren nach einem der Ansprüche 1 bis 9, wobei der Kern der Verbundplatte aus einem einzigen Material besteht, nämlich aus einer Zellschaumplatte, wie beispielsweise Polyethylenschaum (PE), Polyethylenterephthalatschaumstoffen (PET), Polyurethanschaumstoffen (PUR), Acrylschaumstoffen, biobasierten Schaumstoffen, Polymethacrylimidschaumstoffen (PMI) und auch verschiedenen Materialien wie beispielsweise Kork.

11. Verfahren nach einem der Ansprüche 1 bis 10, wobei der Kern der Verbundplatte mehrere Schichten (C1, C2, C3) mit einer Anzahl zwischen 2 und N, einer ganzen Zahl größer als 3, mit unterschiedlichen Eigenschaften umfasst, beispielsweise mehrere Schichten C1 bis C3 aus übereinanderliegenden Kunststoffschäumen mit unterschiedlichen Dichten und/oder aus unterschiedlichen Materialien (Polyethylenschaum oder auch Polyurethanschaum: Polyurethanschäume (PUR), Acrylschäume, biobasierte Schäume).

12. Verfahren zur Herstellung einer Verbundplatte unter Anwendung des Verfahrens zur Verstärkung einer Platte (P) über ihre Dicke nach einem der Ansprüche 1 bis 11, um Einfügungen von Verstärkungselementen (1) in eine Platte (P) vorzunehmen, wobei jedes Verstärkungselement (1) auf beiden Seiten der Platte vorsteht, oder auch auf beiden Seiten der Platte bündig vorgesehen ist, oder auch auf einer Seite der Platte vorstehend und auf der anderen Seite der Platte bündig vorgesehen ist, und wobei zwei Deckschichten (17, 18) an den beiden Seiten der Platte hinzufügt werden, wobei die Innenseite jeder Deckschicht der Platte zugewandt ist und mit den vorstehenden/bündigen Teilen der Verstärkungselemente in Kontakt steht, dann ein Harz unter Vakuum injiziert wird, das die Deckschichten und die Verstärkungselemente im Inneren der Platte imprägniert, wobei durch die Bohrungen der Platten hindurch Verstärkungsbrücken geschaffen werden, wobei jede Verstärkungsbrücke ein mit Harz imprägniertes Verstärkungselement umfasst, wobei die Verbundplatte, nach Polymerisation des Harzes, mit zwei Deckschichten erhalten wird, die über ihre Innenseite jeweils mit den beiden Seiten der Platte verbunden sind, und das Vorhandensein von Verstärkungsbrücken in Form des mit Harz imprägnierten Verstärkungselements, die beiden Deckschichten miteinander verbindet,

oder Verfahren zur Herstellung einer Verbundplatte unter Anwendung des Verfahrens zur Verstärkung einer Platte (P) über ihre Dicke nach einem der Ansprüche 1 bis 11, um Einfügungen von Verstärkungselementen (1) in eine Platte (P) vorzunehmen, wobei jedes Verstärkungselement (1) auf beiden Seiten der Platte vorsteht, oder auch auf beiden Seiten der Platte bündig vorgesehen ist, oder auch auf einer Seite der Platte vorstehend und auf der anderen Seite der Platte bündig vorgesehen ist, und wobei zwei Deckschichten (17, 18) an den beiden Seiten der Platte hinzufügt werden, wobei die Innenseite jeder Deckschicht der Platte zugewandt ist und mit den vorstehenden/bündigen Teilen der Verstärkungselemente in Kontakt steht, und wobei die Verstärkungselemente und die beiden Deckschichten Verstärkungsfasern und thermoplastische Fasern umfassen und wobei die Anordnung aus Deckschichten und durch Verstärkungselemente verstärkter Platte erhitzt wird, bis ein Schmelzen der thermoplastischen Fasern erreicht wird, wobei die Verbundplatte, nach der Verfestigung durch Abkühlung des thermoplastischen Polymers, mit zwei Deckschichten erhalten wird, die über ihre Innenseite jeweils mit den beiden Seiten der Platte verbunden sind, und das Vorhandensein von Verstärkungsbrücken in Form der Verstärkungsfasern aus mit thermoplastischem Polymer imprägnierten Verstärkungselementen die beiden Deckschichten miteinander verbindet,

oder Verfahren zur Herstellung einer Verbundplatte unter Anwendung des Verfahrens zur Verstärkung einer Platte (P) über ihre Dicke nach einem der Ansprüche 1 bis 11, um Einfügungen von Verstärkungselementen (1) in eine Platte (P) vorzunehmen, wobei jedes Verstärkungselement (1) auf beiden Seiten der Platte vorsteht, oder auch auf beiden Seiten der Platte bündig vorgesehen ist, oder auch auf einer Seite der Platte vorstehend und auf der anderen Seite der Platte bündig vorgesehen ist, und wobei zwei Deckschichten (17, 18) an den beiden Seiten der Platte hinzufügt werden, wobei die Innenseite jeder Deckschicht der Platte zugewandt ist und mit den vorstehenden/bündigen Teilen der Verstärkungselemente in Kontakt steht, wobei dann unter Druck, der höher als der Atmosphärendruck ist, ein Harz an Einspritzpunkten in eine Form eingespritzt wird, wobei der Injektionsdruck kleiner oder gleich 3 bar ist, die Form unter Vakuum zwischen 0,2 und 0,3 bar unter dem Atmosphärendruck gehalten wird, das Harz die Deckschichten (17, 18) und die Verstärkungselemente (1) innerhalb der Platte imprägniert, wobei durch die Bohrungen der Platten hindurch Verstärkungsbrücken geschaffen werden, wobei jede Verstärkungsbrücke ein mit Harz imprägniertes Verstärkungselement (1) umfasst, wobei die Verbundplatte, nach Polymerisation des Harzes, mit zwei Deckschichten (17, 18) erhalten wird, die über ihre Innenseite jeweils mit den beiden Seiten der Platte verbunden sind, und das Vorhandensein von Verstärkungsbrücken in Form des mit Harz imprägnierten Verstärkungselements, die beiden Deckschichten (17, 18) miteinander verbindet.

**13.** Verbundplatte, die durch das Herstellungsverfahren nach Anspruch 12 erhalten wird, umfassend zwei Deckschichten, die über ihre Innenseite jeweils mit den beiden Seiten der Platte (P) verbunden sind, und wobei das Vorhandensein von Verstärkungsbrücken in Form von Verstärkungsfasern der mit Harz imprägnierten Verstärkungselemente, die beiden Deckschichten miteinander verbindet; wobei die Platte die folgenden Merkmale aufweist:

- eine Dicke E der Platte, ohne Deckschichten, zwischen einschließlich 30 mm und 300 mm, insbesondere zwischen einschließlich 50 mm und 300 mm,
- zylindrische Verstärkungsbrücken mit einem Durchmesser zwischen einschließlich 2,5 mm und 12,5 mm,
- einen Anteil an Verstärkungsfasern in den Verstärkungsbrücken zwischen einschließlich 30 und 80 Vol.-%, insbesondere zwischen einschließlich 45 und 89 Vol.-%, insbesondere zwischen 45 und 70 Vol.-%.

**14.** Verbundplatte nach Anspruch 13, wobei die Platte eine Mehrschichtplatte mit unterschiedlichen Dichten und/oder unterschiedlichen Materialien und/oder mit Metallverkleidungsplatten (Par1, Par2) ist.

**Claims**

**1.** A method for reinforcing a panel (P), flat or preformed in three dimensions, according to its thickness E :

- a step a) of providing a reinforcing element (1), which is elongated, flexible, with two longitudinal ends (10,11) having a length L strictly greater than or equal to twice the thickness E of the panel (P) at the point of insertion,

- a step b) of positioning and holding said reinforcing element (1), on one side of the panel, called insertion side (Ci),
- a step c) of gripping the reinforcing element (1), on the insertion side in an intermediate position between the two longitudinal ends of the reinforcing element,
- an insertion step d) wherein the said reinforcement element gripped in the intermediate position is pulled, through a bore (2) passing through the panel, by folding the reinforcement element on itself, and to a final position (Pf) wherein the two longitudinal ends (10, 11) overtake the bore (2) on the insertion side (Ci) or else are provided flush with the panel side on the insertion side, a loop (12) of the reinforcing element projecting from the bore (2) on the side of the panel opposite to the insertion side (Ci), or else being provided in a position in the vicinity of the external panel side on the side of the panel opposite to the insertion side configured so that a cut of the loop (12) divides the reinforcing element into two length sections (15, 16) each extending through the bore, positioning the ends (151, 161) of the two length sections (15, 16) flush with the external wall of the panel on the side opposite to the insertion side (Ci),

and wherein the reinforcement method involves a step of forming the bore, prior to the insertion step d), wherein the said bore (2) is drilled into the panel (P) by the means of a drilling tool (4) comprising a cylindrical body (40) provided at its base with a circular cutting edge (41), and wherein the bore is formed by a movement combining an advance along the cylindrical body axis (40) and a rotation around the cylindrical body axis (40), generating a drill core resulting from the drilling of the bore, internal to the cylindrical body,

and wherein said positioning and holding step b) is carried out by means of a holding mechanism (5) comprising two clamps (50, 51), configured to hold said reinforcing element (1) in two positions, on either side, of the middle of the reinforcing element (1) along its length,

and wherein it is expected to provide robotic and/or automated means so as to ensure :

- different positions of said insertion tool (3) relative to the panel (P),
- different inclinations ($\alpha$) of said insertion tool (3) relative to the panel (P) and so as to allow the insertion of a plurality of reinforcing elements according to a spatial distribution of the adjustable insertion points and according to adjustable inclinations.

2. Method according to claim 1 wherein the circular cutting edge (41) is formed by an external bevel.

3. Method for reinforcing a panel (P) according to one of claims 1 and 2 wherein the reinforcing element (1) is a set of yarns (13) extending lengthwise over a length L of the reinforcing element (1), those yarns being juxtaposed, the yarns of the set of yarns can be eventually twisted together along the length of the reinforcing element.

4. Method according to claim 3, wherein the yarns may be glass fiber yarns, carbon fiber yarns, aramid fiber yarns, plant fiber yarns, for example such as linen, or else polyester fiber yarns.

5. Method according to claim 1, wherein the reinforcement elements are fibrous, and comprise reinforcing fibers, and thermoplastic fibers, able to fuse together.

6. Method according to claims 1 to 5, wherein the drill core resulting from the drilling of the bore, internal to the cylindrical body, can be evacuated by pressurizing the cylindrical body with a gas.

7. Method according to one of claims 1 to 6, wherein a panel (P) support can be comprised, the robotic means comprising, disposed on either side of the panel support :

- a first robotic arm (R1) handling the insertion tool (3), and
- a second robotic arm, handling the two clamps (50, 51) of the holding mechanism (5).

8. Method according to one of claims 1 to 7, wherein the external diameter of the cylindrical body (40) of the drilling tool is comprised between 4 mm and 14 mm, and wherein the internal diameter of the cylindrical body is comprised between 3 mm and 12,5 mm.

9. Method according to one of claims 1 to 8, wherein the thickness (E) of the panel P is comprised between 30 mm and 300 mm.

10. Method according to one of claims 1 to 9, wherein the panel intended to form the core of the composite panel is mono-material, consisting of a cellular foam panel such as polyethylene (PE) foams, polyethylene terephthalate (PET) foams, polyurethane (PUR) foams, acrylic foams, bio-based foams, polymethacrylimide (PMI) foams and also various materials such as cork for example.

11. Method according to one of claims 1 to 10, wherein the panel intended to form the core of the composite panel has several layers (C1, C2, C3), of numbers comprised between 2 and N, integer greater than 3 of different features, for example several layers C1 to C3 in superposition of plastic foams of different densities and/or of different materials (polyethylene foam or polyurethane foam; polyurethane foams (PUR), acrylic foams, bio-sourced foams).

12. Method for manufacturing a composite panel implementing the panel reinforcement method (P) according to its thickness according to one of the claims 1 to 11, to achieve insertions of reinforcing elements (1) into a panel (P), each reinforcing element (1) being protruding from both sides of the panel, or else protruding from one side of the panel and flush with the other side of the panel, and wherein two skins (17, 18) are added against both sides of the panel, the internal face of each skin facing the panel in contact with the protruding/flush part(s) of the reinforcing elements, then a resin is injected under vacuum impregnating the skins and the reinforcing elements within the panel, with creation of reinforcing bridges through the bores of the panels, each reinforcing bridge comprising a reinforcing element impregnated with resin, the composite panel being obtained, after polymerization of the resin, with two skins bonded by their internal face respectively to both sides of the panel, and the presence of reinforcing bridges in the form of the reinforcing element impregnated with resin joining the two skins together,

or method for manufacturing a composite panel implementing the method for reinforcing the panel (P) according to its thickness according to one of claims 1 to 11, to achieve insertions of reinforcing elements (1) into a panel (P), each reinforcing element (1) protruding from both sides of the panel, or else provided flush with both sides of the panel, or else protruding from one side of the panel and flush with the other side of the panel, and wherein two skins (17, 18) are added against both sides of the panel, the internal face of each skin facing the panel in contact with the protruding/flush part(s) of the reinforcing elements, and wherein the reinforcing elements and the two skins comprise reinforcing fibers, and thermoplastic fibers and wherein the skin and panel assembly reinforced by the reinforcing elements is heated, until the thermoplastic fibers melt, the composite panel being obtained, after solidification by cooling the thermoplastic polymer, with two skins bonded by their internal face respectively to both sides of the panel, and the presence of reinforcing bridges in the form of the reinforcing fibers of the reinforcing elements impregnated with thermoplastic polymer joining the two skins together,
or method for manufacturing a composite panel implementing the method for reinforcing the panel (P) according to its thickness according to one of claims 1 to 11, to achieve insertions of reinforcing elements (1) into a panel (P), each reinforcing element (1) protruding from both sides of the panel, or else provided flush with both sides of the panel, or else protruding from one side of the panel and flush with the other side of the panel, and wherein two skins (17, 18) are added against both sides of the panel, the internal face of each skin facing the panel in contact with the protruding/flush part(s) of the reinforcing elements, then a resin is injected under a pressure greater than atmospheric pressure at the injection points in a mold, the injection pressure less than or equal to 3 bars, the mold maintained under vacuum between 0.2 and 0.3 bar below atmospheric pressure, the resin impregnating the skins (17, 18) and the reinforcing elements (1) within the panel, with creation of reinforcing bridges through the bores of the panels, each reinforcing bridge comprising a reinforcing element 1 impregnated with resin, the composite panel being obtained, after polymerization of the resin, with two skins (17, 18) bonded respectively to both sides of the panel, by their internal face, and the presence of reinforcing bridges in the form of the reinforcing element (1) impregnated with resin joining the skins (17, 18) together.

13. A composite panel obtained according to the manufacturing method of claim 12 comprising two skins bonded by their internal face respectively to both sides of the panel (P), and the presence of reinforcing bridges in the form of the reinforcing fibers of the reinforcing elements impregnated with resin joining the two skins together; said composite panel having the following features:

- a thickness E of the panel, excluding skins, comprised between 30 mm and 300 mm, in particular comprised between 50 mm and 300 mm,
- cylindrical reinforcing bridges with a diameter comprised between 2.5 mm and 12.5 mm,
- a reinforcing fiber content in the reinforcing bridges comprised between 30% and 80% by volume, in particular comprised between 45% and 89% by volume, in particular between 45% and 70% by volume.

14. The composite panel according to claim 19 wherein said panel is a multilayer of different densities and/or of different materials and/or having metal facing sheets (Par1, Par2).

FIG. 1

FIG. 1a

**FIG. 2**

FIG. 3

FIG. 3a

FIG. 4

FIG. 5

FIG. 6

1

2

10

11

FIG. 7

31

32

31

33

12

Pf

E

L/2

1

10

11

**FIG. 8**

151  161

15  16  P

150  160

17

P

1  1

18

**FIG. 9**

FIG. 10

FIG. 11

FIG. 12

**FIG. 13**

**FIG. 14**

**FIG. 15**

**FIG. 16**

**FIG. 17**

**FIG. 18**

FIG. 19

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3029834
- US 20080226876 A1
- US 3030256 B1
- WO 2006125562 A
- EP 3173216 A1